(19)

Europäisches
Patentamt
European
Patent Office
Office européen
des brevets

(11) **EP 4 512 703 A1**

(12) **EUROPEAN PATENT APPLICATION**
published in accordance with Art. 153(4) EPC

(43) Date of publication:
**26.02.2025 Bulletin 2025/09**

(21) Application number: **22938609.9**

(22) Date of filing: **21.12.2022**

(51) International Patent Classification (IPC):
**B62D 101/00** (2006.01)    **B62D 119/00** (2006.01)
**B62D 6/00** (2006.01)    **B62D 5/04** (2006.01)

(52) Cooperative Patent Classification (CPC):
**B62D 5/04; B62D 6/00**

(86) International application number:
**PCT/JP2022/047144**

(87) International publication number:
**WO 2023/203812 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022   JP 2022069263**

(71) Applicant: **NSK Steering & Control, Inc.
Tokyo, 141-0032 (JP)**

(72) Inventors:
• **TSUBAKI, Takahiro
  Maebashi-shi, Gunma 371-8527 (JP)**
• **KOISO, Takayuki
  Maebashi-shi, Gunma 371-8527 (JP)**

(74) Representative: **SSM Sandmair
Patentanwälte Rechtsanwalt
Partnerschaft mbB
Joseph-Wild-Straße 20
81829 München (DE)**

(54)    **CONTROL DEVICE FOR VEHICLE STEERING SYSTEM**

(57)    There is provided a control device of a vehicle steering system capable of obtaining a steering feeling reflecting a situation of a road surface and a state of a vehicle. A steering torque target value generation unit (200) includes a steering reaction force torque value generation unit (210) that generates a first torque value (Tref_a) that increases or decreases according to at least an actual steering angle ($\theta$h_act), a road surface reaction force sensitive torque compensation value generation unit (220) that generates a second torque value (Tref_d) that increases or decreases according to a road surface reaction force torque estimation value estimated on the basis of at least the first steering motor current command value (Iref_a), and a gain ratio generation unit (230) that generates a first gain (Ga) that increases or decreases according to a vehicle speed (Vs) of a vehicle and a second gain (Gb) that causes a sum of the first gain (Ga) and the second gain (Gb) to be one. A value obtained by multiplying the first torque value (Tref_a) by the first gain (Ga) and a value obtained by multiplying the second torque value (Tref_d) by the second gain (Gb) are added to generate a steering torque target value (Th_ref).

FIG.4

**Description**

Field

The present invention relates to a control device for a vehicle steering system.

Background

As one of vehicle steering systems, there is a steer-by-wire (SBW) system in which a steering mechanism (force feedback actuator (FFA)) having a steering wheel operated by a driver and a turning mechanism (road wheel actuator (RWA)) for turning a steered wheel are mechanically separated. In the SBW system, the steering mechanism and the turning mechanism are electrically connected via a control device (electronic control unit (ECU)), an operation of a steering wheel is transmitted to the turning mechanism by an electrical signal to steer a steered wheel, and a steering reaction force for giving an appropriate steering feeling to a driver is generated by the steering mechanism. The steering mechanism generates a steering reaction force by a reaction force actuator including a reaction force motor, and the turning mechanism steers steered wheels by a steering actuator including a steering motor. The reaction force actuator and the steering wheel are mechanically connected via a column shaft, and a reaction force (torque) generated by the reaction force actuator is transmitted to the driver via the column shaft and the steering wheel.

In the SBW system in which the steering mechanism and the turning mechanism are mechanically separated, for example, it is necessary to transmit an oversteer state or an understeer state when the vehicle travels on a low $\mu$ road where frictional resistance of the road surface is significantly reduced due to a frozen road surface, a hydroplaning phenomenon in rainy weather, or the like to the reaction force device as a steering reaction force. Patent Literature 1 below discloses a vehicle steering device that reflects a situation of a road surface on a steering reaction force by estimating a reaction force (self-aligning torque) acting from the road surface and adding the reaction force to a reaction force generated according to a steering wheel angle.

Citation List

Patent Literature

Patent Literature 1: WO 2019/167661 A1

Summary

Technical Problem

The self-aligning torque changes depending on the state of the vehicle such as the vehicle speed and the steering angle in addition to the situation of the road surface. In the above-described conventional technique, there is a possibility that a steering feeling reflecting the situation of the road surface cannot be obtained depending on the state of the vehicle.

The present invention has been made in view of the above problems, and an object thereof is to provide a control device of a vehicle steering system capable of obtaining a steering feeling reflecting a situation of a road surface and a vehicle state.

Solution to Problem

To achieve the above object, a control device of a vehicle steering system according to an embodiment of the present invention including a reaction force device that drives a reaction force motor that gives a steering reaction force to a steering wheel according to a steering angle of the steering wheel, and a steering device that drives a steering motor that steers a steered wheel according to the steering angle of the steering wheel, the control device comprising:

a steering torque target value generation unit that generates a steering torque target value that is a target value of steering torque for obtaining the steering reaction force;
a steered angle target value generation unit that generates, on a basis of the steering angle, a steered angle target value that is a target value of the steered angle of the steered wheel; and
a steered angle control unit that generates, on a basis of the steered angle target value, a first steering motor current command value that is a target value of a current to be supplied to the steering motor, wherein
the steering torque target value generation unit includes
a steering reaction force torque value generation unit that generates a first torque value that increases or decreases according to at least the steering angle,
a road surface reaction force sensitive torque compensation value generation unit that generates a second torque value that increases or decreases according to at least a road surface reaction force torque estimation value estimated on a basis of the first steering motor current command value, and
a gain ratio generation unit that generates a first gain that increases or decreases according to at least one of a vehicle speed or a steered angle of a vehicle, and a second gain that causes a sum of the first gain and the second gain to be one, and
the steering torque target value generation unit adds a value obtained by multiplying the first torque value by the first gain and a value obtained by multiplying the second torque value by the second gain to generate the steering torque target value.

According to the above configuration, the steering reaction force corresponding to the road surface reaction force torque estimation value can be given to the steering wheel at a ratio corresponding to at least one of the vehicle speed or the steering angle of the vehicle. Thus, it is possible to obtain a steering feeling reflecting the situation of the road surface and the state of the vehicle.

As a desirable embodiment of the control device of the vehicle steering system, it is preferable that the steering torque target value generation unit increases the second torque value as the vehicle speed increases.

According to the above configuration, it is possible to give a steering reaction force adapted to road surface reaction force that increases as the vehicle speed increases to the steering wheel.

As a desirable embodiment of the control device of the vehicle steering system, it is preferable that the gain ratio generation unit decreases the first gain as the vehicle speed increases.

According to the above configuration, the steering reaction force corresponding to the road surface reaction force torque estimation value can be given to the steering wheel at a ratio corresponding to the vehicle speed. Thus, it is possible to obtain a steering feeling reflecting the situation of the road surface and the vehicle speed.

As a desirable embodiment of the control device of the vehicle steering system, the gain ratio generation unit decreases the first gain within a range from a first vehicle speed or more to a second vehicle speed or less.

According to the above configuration, the steering reaction force corresponding to the road surface reaction force torque estimation value can be given to the steering wheel at a ratio corresponding to the vehicle speed within the range from the first vehicle speed or more to the second vehicle speed or less.

As a desirable embodiment of the control device of the vehicle steering system, a first gain in a range equal to or less than the first vehicle speed may be larger than a second gain in a range equal to or more than the second vehicle speed.

As a desirable embodiment of the control device of the vehicle steering system, a first gain in a range equal to or less than the first vehicle speed may be equal to a second gain in a range equal to or more than the second vehicle speed.

As a desirable embodiment of the control device of the vehicle steering system, a first gain in a range equal to or less than the first vehicle speed may be smaller than a second gain in a range equal to or more than the second vehicle speed.

As a desirable embodiment of the control device of the vehicle steering system, it is preferable that the gain ratio generation unit decreases the first gain as an actual steering angle that is an actual steering angle of the steering wheel increases.

According to the above configuration, the steering reaction force corresponding to the road surface reaction force torque estimation value can be given to the steering wheel at a ratio corresponding to an actual steering angle. Thus, it is possible to obtain a steering feeling reflecting the situation of the road surface and the actual steering angle.

As a desirable embodiment of the control device of the vehicle steering system, it is preferable that the gain ratio generation unit decreases the first gain within a range from a first steering angle or more to a second steering angle or less.

According to the above configuration, the steering reaction force corresponding to the road surface reaction force torque estimation value can be given to the steering wheel at a ratio corresponding to the actual steering angle within the range from the first steering angle or more to the second steering angle or less.

As a desirable embodiment of the control device of the vehicle steering system, a first gain in a range equal to or less than the first steering angle may be larger than a second gain in a range equal to or more than the second steering angle.

As a desirable embodiment of the control device of the vehicle steering system, a first gain in a range equal to or less than the first steering angle may be equal to a second gain in a range equal to or more than the second steering angle.

As a desirable embodiment of the control device of the vehicle steering system, a first gain in a range equal to or less than the first steering angle may be smaller than a second gain in a range equal to or more than the second steering angle.

As a desirable embodiment of the control device of the vehicle steering system, it is preferable that the gain ratio generation unit decreases the first gain as actual steered angle that is an actual steered angle of the steered wheel increases.

According to the above configuration, the steering reaction force corresponding to the road surface reaction force torque estimation value can be given to the steering wheel at a ratio corresponding to the actual steered angle. Thus, it is possible to obtain a steering feeling reflecting the situation of the road surface and the actual steered angle.

As a desirable embodiment of the control device of the vehicle steering system, it is preferable that the gain ratio generation unit decreases the first gain within a range from a first steered angle or more to a second steered angle or less.

According to the above configuration, it is possible to give the steering reaction force corresponding to the road surface reaction force torque estimation value to the steering wheel at a ratio corresponding to the actual steered angle within the range from the first steered angle or more to the second steered angle or less.

As a desirable embodiment of the control device of the vehicle steering system, a first gain in a range equal to or less than the first steered angle may be larger than a second gain in a range equal to or more than the second steered angle.

As a desirable embodiment of the control device of the vehicle steering system, a first gain in a range equal to or less than the first steered angle may be equal to a second gain in a range equal to or more than the second steered angle.

As a desirable embodiment of the control device of the vehicle steering system, a first gain in a range equal to or less than the first steered angle may be smaller than a second gain in a range equal to or more than the second steered angle.

As a desirable embodiment of the control device of the vehicle steering system, it is preferable that the steered angle control unit includes a friction compensation unit that calculates, on a basis of the steered angle target value, a steering motor current compensation value different between a case where the steered wheel is turned rightward and a case where the steered wheel is turned leftward, and the steered angle control unit generates a second steering motor current command value for driving the steering motor on a basis of the first steering motor current command value and the steering motor current compensation value.

According to the above configuration, friction compensation control can be effectively performed regardless of steering wheel operation speed of the driver. Thus, it is possible to reduce the sense of discomfort given to the driver in switching of the steering direction from turning increase to turning back of the steering wheel operation by the driver or switching from the turning back to the turning increase.

As a desirable embodiment of the control device of the vehicle steering system, it is preferable that the steering motor current compensation value has a hysteresis characteristic according to a change in the steered angle target value.

According to the above configuration, different steering motor current compensation values are calculated when the steered wheels are turned to the right and when the steered wheels are turned to the left.

As a desirable embodiment of the control device of the vehicle steering system, it is preferable that the steering motor current compensation value monotonously increases in a region from a first steered angle target value when steering is started to a second steered angle target value or less obtained by adding a predetermined steered angle change amount threshold to the first steered angle target value, and becomes a constant value in a region larger than the second steered angle target value.

According to the above configuration, friction compensation control can be effectively performed from a state where the steered wheel is stationary regardless of the steering wheel operation speed of the driver. Thus, even in a situation where the steering wheel operation by the driver is quite slow, it is possible to reduce the sense of discomfort given to the driver in switching of the steering direction from turning increase to turning back of the steering wheel operation by the driver or switching from the turning back to the turning increase.

As a desirable embodiment of the control device of the vehicle steering system, it is preferable that the friction compensation unit increases or decreases the steering motor current compensation value in accordance with the second steering motor current command value.

According to the above configuration, the friction compensation control according to the frictional force caused by gear torque can be implemented.

As a desirable embodiment of the control device of the vehicle steering system, it is preferable that the steering motor current compensation value monotonously increases as the second steering motor current command value increases.

According to the above configuration, it is possible to implement friction compensation control according to the frictional force caused by the gear torque that monotonically increases as the second steering motor current command value increases.

As a desirable embodiment of the control device of the vehicle steering system, preferably further comprising:

a current compensation value calculation unit that calculates a first current compensation value; and
a current sensitive gain generation unit that generates a gain that monotonically increases as the second steering motor current command value increases, wherein
the friction compensation unit calculates a second current compensation value by multiplying the first current compensation value by the gain.

According to the above configuration, it is possible to implement friction compensation control according to the frictional force caused by the gear torque that monotonically increases as the second steering motor current command value increases.

As a desirable embodiment of the control device of the vehicle steering system, it is preferable that the friction compensation unit holds data in which the second steering motor current command value is associated with a gain that monotonically increases as the second steering motor current command value increases, and calculates the steering motor current compensation value on a basis of the data.

According to the above configuration, it is possible to implement friction compensation control according to the frictional force caused by the gear torque that monotonically increases as the second steering motor current command value increases.

Advantageous Effects of Invention

According to the present invention, a steering reaction force corresponding to a road surface reaction force torque estimation value can be given to the steering wheel at a ratio according to the state of the vehicle, and thus it is possible to provide a control device of a vehicle steering system capable of obtaining the steering feeling reflecting the situation of the road surface and the state of the vehicle.

Brief Description of Drawings

FIG. 1 is a configuration diagram illustrating an example of an outline of an SBW system including a control device according to the present disclosure.

FIG. 2 is a schematic diagram illustrating a hardware configuration of an ECU.

FIG. 3 is a diagram illustrating an example of a control block configuration of the control device according to the present disclosure.

FIG. 4 is a block diagram illustrating a configuration example of a steering torque target value generation unit according to a first embodiment.

FIG. 5 is a block diagram illustrating a configuration example of a steering reaction force torque value generation unit.

FIG. 6A is a diagram illustrating a characteristic example of a basic map.

FIG. 6B is a diagram illustrating a characteristic example of a torque value Tref_a.

FIG. 7 is a block diagram illustrating a configuration example of a damping torque value generation unit.

FIG. 8A is a diagram illustrating a characteristic example of a damping gain map.

FIG. 8B is a conceptual diagram illustrating a characteristic example of a torque value Tref_a+Tref_b.

FIG. 9 is a region diagram for describing a steering direction in the present disclosure.

FIG. 10 is a block diagram illustrating a configuration example of a hysteresis compensation unit.

FIG. 11 is a diagram illustrating an example of output characteristics of the hysteresis compensation unit.

FIG. 12 is a block diagram illustrating a configuration example of a road surface reaction force sensitive torque compensation value generation unit according to the first embodiment.

FIG. 13 is an image diagram illustrating a state of torque generated between a road surface and a steering motor.

FIG. 14 is a block diagram illustrating a configuration example of a road surface reaction force torque estimation unit.

FIG. 15 is a conceptual diagram for describing a method of calculating an actual road surface reaction force torque acting on the turning mechanism.

FIG. 16 is a conceptual diagram illustrating a configuration for executing a simulation for deriving a transfer function Gfil.

FIG. 17 is a line diagram illustrating an example of characteristics of a road surface reaction force sensitive torque map.

FIG. 18 is a line chart conceptually illustrating a characteristic example of a second torque value after sign conversion.

FIG. 19A is a line diagram conceptually illustrating a first example of a gain ratio setting example in a gain ratio generation unit according to the first embodiment.

FIG. 19B is a line chart conceptually illustrating a second example of the gain ratio setting example in the gain ratio generation unit according to the first embodiment.

FIG. 19C is a line chart conceptually illustrating a third example of the gain ratio setting example in the gain ratio generation unit according to the first embodiment.

FIG. 20 is a block diagram illustrating a configuration example of a steering torque target value generation unit according to a second embodiment.

FIG. 21 is a diagram conceptually illustrating an example of a gain ratio setting example in a gain ratio generation unit according to the second embodiment.

FIG. 22 is a block diagram illustrating a configuration example of a steering torque target value generation unit according to a third embodiment.

FIG. 23 is a diagram conceptually illustrating an example of a gain ratio setting example in a gain ratio generation unit according to the third embodiment.

FIG. 24 is a block diagram illustrating a configuration example of a steering torque target value generation unit according to a fourth embodiment.

FIG. 25 is a block diagram illustrating a configuration example of a gain ratio generation unit according to the fourth embodiment.

FIG. 26A is a diagram conceptually illustrating an example of a gain ratio setting example in the gain ratio generation unit according to the fourth embodiment.

FIG. 26B is a diagram conceptually illustrating an example of a gain ratio setting example in the gain ratio generation unit according to the fourth embodiment.

FIG. 27 is a block diagram illustrating a configuration example of a steering torque target value generation unit according to a fifth embodiment.

FIG. 28 is a block diagram illustrating a configuration example of a gain ratio generation unit according to the fifth embodiment.

FIG. 29A is a diagram conceptually illustrating an example of a gain ratio setting example in the gain ratio generation unit according to the fifth embodiment.

FIG. 29B is a diagram conceptually illustrating an example of a gain ratio setting example in the gain ratio generation unit according to the fifth embodiment.

FIG. 30 is a block diagram illustrating a configuration example of a steering torque target value generation unit according to a sixth embodiment.

FIG. 31 is a 3D map illustrating an example of a gain ratio generation method according to the sixth embodiment.

FIG. 32 is a block diagram illustrating a configuration example of a steered angle control unit.

FIG. 33 is a block diagram illustrating a configuration example of a friction compensation unit.

FIG. 34 is a diagram illustrating a characteristic example of a first current compensation value in a current compensation value calculation unit.

FIG. 35A is a line diagram illustrating a first example of a current sensitive gain map.

FIG. 35B is a line diagram illustrating a second example of the current sensitive gain map.

FIG. 36 is a diagram illustrating an example of output characteristics of the friction compensation unit.

FIG. 37 is a block diagram illustrating a configuration example of a friction compensation unit according to a modification.

FIG. 38A is a first conceptual diagram illustrating a specific example of friction compensation control by the friction compensation unit.

FIG. 38B is a first conceptual diagram illustrating a specific example of friction compensation control by the friction compensation unit.

FIG. 39A is a second conceptual diagram illustrating a specific example of friction compensation control by the friction compensation unit.

FIG. 39B is a second conceptual diagram illustrating a specific example of friction compensation control by the friction compensation unit.

Description of Embodiments

Hereinafter, modes for carrying out the invention (hereinafter referred to as embodiments) will be described in detail with reference to the drawings. Note that the present invention is not limited by the following embodiments. In addition, components in the following embodiments include those that can be easily assumed by those skilled in the art, those that are substantially the same, and those within what is called an equivalent range. Furthermore, the components disclosed in the following embodiments can be appropriately combined.

(First embodiment)

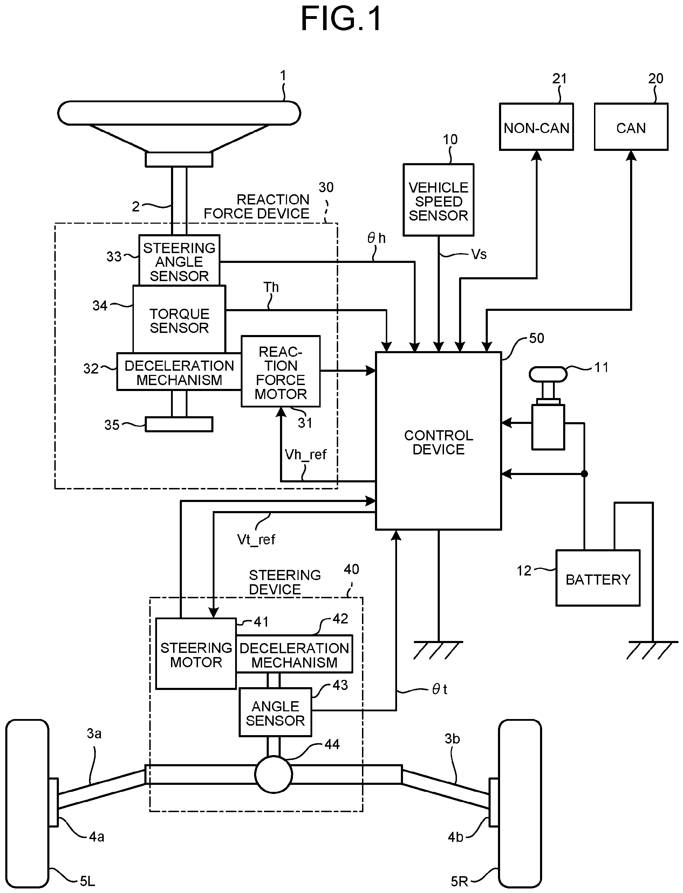

FIG. 1 is a configuration diagram illustrating an example of an outline of an SBW system including a control device according to the present disclosure. The SBW system includes a reaction force device 30 constituting a steering mechanism having a steering wheel operated by a driver, a steering device 40 constituting a turning mechanism for steering steered wheels, and a control device 50 for controlling both the devices.

The SBW system does not include an intermediate shaft mechanically coupled to a column shaft (a steering shaft and a wheel shaft) 2 included in a general electric power steering device, and transmits an operation of a steering wheel 1 by a driver as an electrical signal, specifically, a steering angle θh output from the reaction force device 30 as an electrical signal.

The reaction force device 30 includes a reaction force motor 31 and a deceleration mechanism 32 that decelerates the rotational speed of the reaction force motor 31. The reaction force device 30 transmits the motion state of the vehicle transmitted from steered wheels 5L and 5R to the driver as a steering reaction force. The reaction force motor 31 gives a steering reaction force to the steering wheel 1 via the deceleration mechanism 32.

The reaction force device 30 further includes a steering angle sensor 33 and a torque sensor 34. The steering angle sensor 33 detects the steering angle θh of the steering wheel 1. The torque sensor 34 detects a steering torque Th of the steering wheel 1. Hereinafter, the steering angle θh detected by the steering angle sensor 33 is also referred to as an "actual steering angle θh_act", and the steering torque Th detected by the torque sensor 34 is also referred to as an "actual steering torque Th_act".

In the present disclosure, the column shaft 2 is provided with a stopper (rotation limiting mechanism) 35 that physically sets a steering end which is a limit at which steering can be performed. That is, the magnitude (absolute value) of the steering angle θh is limited by the stopper 35.

The steering device 40 includes a steering motor 41, a deceleration mechanism 42 that reduces the rotational speed of the steering motor 41, and a pinion rack mechanism 44 that converts a rotational motion of the steering motor 41 into a linear motion. The steering device 40 drives the steering motor 41 according to the steering angle θh, gives the driving force to the pinion rack mechanism 44 via the deceleration mechanism 42, and steers the steered wheels 5L and 5R via tie rods 3a and 3b. An angle sensor 43 is disposed near the pinion rack mechanism 44, and detects the steered angle θt of the steered wheels 5L and 5R. Instead of the steered angle θt of the steered wheels 5L and 5R, for example, a mode may be employed in which a motor angle of the steering motor 41, a position of a rack, or the like may be detected, and the detected value are used. Hereinafter, the steered angle θt detected by the angle sensor 43 is also referred to as an "actual steered angle θt_act".

In the present disclosure, the actual steering angle θh_act and the actual steered angle θt_act are also collectively referred to simply as a "steering angle" of the vehicle.

In order to cooperatively control the reaction force device 30 and the steering device 40, the control device 50 generates a voltage control command value Vref1 for driving and controlling the reaction force motor 31 and a voltage control command value Vref2 for driving and controlling the steering motor 41 on the basis of a vehicle speed Vs and the like detected by a vehicle speed sensor 10 in addition to information such as the steering angle θh and the steered angle θt output from both devices.

Power is supplied from a battery 12 to the control device 50, and an ignition key signal is input to the control device through an ignition key 11. Further, a controller area network (CAN) 20 for exchanging various information of the vehicle is connected to the control device 50, and the vehicle speed Vs can be received from the CAN 20. Furthermore, a non-CAN 21 that transmits and receives communication, analog/digital signals, radio waves, and the like other than the CAN 20 can also be connected to the control device 50.

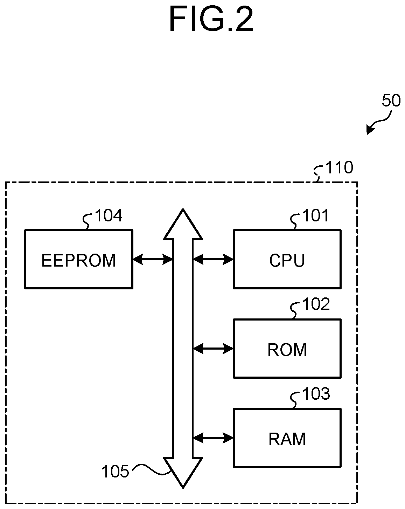

Specifically, the control device 50 is, for example, an electronic control unit (ECU) mounted on a vehicle. The ECU mainly includes a CPU (also including MCU, MPU, and the like). FIG. 2 is a schematic diagram illustrating a hardware configuration of the ECU. As illustrated in FIG. 2, the control device 50 of the vehicle steering system according to the embodiment includes a control computer (Electronic Control Unit, hereinafter also referred to as "ECU") 110.

The ECU 110 includes a central processing unit (CPU) 101, a read only memory (ROM) 102, a random access memory (RAM) 103, an electrically erasable programmable ROM (EEPROM) 104, and the like, which are connected to a bus 105. The CPU 101 executes a control program stored in the ROM 102. The reaction force device 30 and the steering device 40 are cooperatively controlled mainly by the control program executed by the ECU 110. Note that a mode may be employed in which the control device 50 includes one ECU, or the control device 50 may include a reaction force control ECU that controls the reaction force device 30 and a steering control ECU that controls the steering device 40.

The ROM 102 is used as a memory for storing a control program and control data used when the control program is executed. The RAM 103 is used as a work memory for operating the control program.

The EEPROM 104 is a nonvolatile memory capable of holding stored contents even after power is shut off, and stores control data and the like used by the CPU 101 to execute a control program. The various data stored in the EEPROM 104 is used on the control program developed in the RAM 103 after the ECU 110 is powered on, and is overwritten in the EEPROM 104 at a predetermined timing. Note that, here, the EEPROM is used as a nonvolatile memory, but the present invention is not limited thereto, and other nonvolatile memories such as a FLASH-ROM (registered trademark) and an SDRAM may be used.

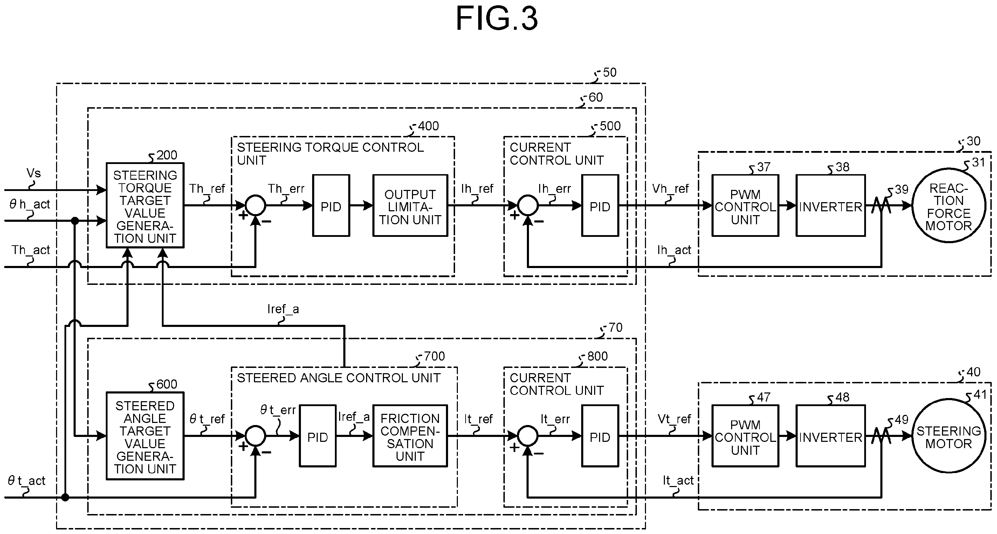

FIG. 3 is a diagram illustrating an example of a control block configuration of the control device according to the present disclosure. In FIG. 3, the reaction force device 30 includes a pulse width modulation (PWM) control unit 37, an inverter 38, and a motor current detector 39 in addition to the reaction force motor 31 and the above-described configuration. In addition to the steering motor 41 and the above-described configuration, the steering device 40 includes a PWM control unit 47, an inverter 48, and a motor current detector 49. The control device 50 implements each control block of a reaction force control system 60 that controls the reaction force device 30 and a steering control system 70 that controls the steering device 40. The reaction force control system 60 and the steering control system 70 cooperate to control the reaction force device 30 and the steering device 40. Note that in a case where the control device 50 includes the reaction force control ECU and the steering control ECU, a mode may be employed in which the reaction force control system 60 is implemented by the reaction force control ECU, and the steering control system 70 is implemented by the steering control ECU. In this case, the reaction force control system 60 in the following description only needs to be replaced with the reaction force control ECU, and the steering control system 70 only needs to be replaced with the steering control ECU.

Each control block in the reaction force control system 60 is implemented by a reaction force control program executed in the ECU 110. Further, each control block in the steering control system 70 is implemented by a steering control program executed in the ECU 110. Note that some or all of the control blocks of the control device 50 may be implemented by hardware. Furthermore, a mode may be employed in which the control device 50 includes the PWM control unit 37, the inverter 38, the motor current detector 39, the PWM control unit 47, the inverter 48, and the motor current detector 49.

As illustrated in FIG. 3, the control device 50 includes, as control blocks, a steering torque target value generation unit 200, a road surface reaction force sensitive torque compensation value generation unit 220, a steering torque control unit 400, a current control unit 500, a steered angle target value generation unit 600, a steered angle control unit 700, and a current control unit 800. The steering torque target value generation unit 200, the road surface reaction force sensitive torque compensation value generation unit 220, the steering torque control unit 400, and the current control unit 500 are control blocks constituting the reaction force control system 60. The steered angle target value generation unit 600, the steered angle control unit 700, and the current control unit 800 are control blocks constituting the steering control system 70.

The reaction force control system 60 performs control so that the actual steering torque Th_act detected by the torque sensor 34 follows a steering torque target value Th_ref that is a target value of the steering torque of the reaction force device 30.

The steering torque target value generation unit 200 generates the steering torque target value Th_ref.

The steering torque control unit 400 generates a reaction force motor current command value Ih_ref for driving the reaction force motor 31. In the steering torque control unit 400, a current command value is generated so that a deviation Th_err between the steering torque target value Th_ref and the actual steering torque Th_act approaches zero, output limitation on upper and lower limit values of the current command value is performed by the output limitation unit, and the reaction force motor current command value Ih_ref is calculated.

The current control unit 500 performs current control of the reaction force motor 31. The current control unit 500 calculates a voltage control command value Vh_ref so that a deviation Ih_err between the reaction force motor current command value Ih_ref output from the steering torque control unit 400 and an actual current value (motor current value) Ih_act of the reaction force motor 31 detected by the motor current detector 39 approaches zero.

In the reaction force device 30, driving of the reaction force motor 31 is controlled via the PWM control unit 37 and the inverter 38 on the basis of the voltage control command value Vh_ref.

The steering control system 70 performs control so that the actual steered angle θt_act detected by the angle sensor 43 follows a steered angle target value θt_ref.

The steered angle target value generation unit 600 generates the steered angle target value θt_ref on the basis of the steering angle θh.

The steered angle control unit 700 generates a second steering motor current command value It_ref for driving the steering motor 41. Specifically, the steered angle control unit 700 generates a first steering motor current command value Iref_a, which is a control target value of the current supplied to the steering motor 41 so that a deviation θt_err between the steered angle target value θt_ref and the actual steered angle θt_act approaches zero, and performs friction compensation control by a friction compensation unit on the first steering motor current command value Iref_a to calculate the second steering motor current command value It_ref. Hereinafter, an example in which the friction compensation unit is provided in the steered angle control unit 700 will be described, but a configuration not including the friction compensation unit may be used. Note that, in the configuration not including the friction compensation unit, the first steering motor current command value Iref_a after the PID control is generated as the second steering motor current command value It_ref.

The current control unit 800 performs current control of the steering motor 41. The current control unit 800 calculates a voltage control command value Vt_ref so that a deviation It_err between the second steering motor current command value It_ref output from the steered angle control unit 700 and an actual current value (motor current value) It_act of the steering motor 41 detected by the motor current detector 49 approaches zero.

In the steering device 40, driving of the steering motor 41 is controlled via the PWM control unit 47 and the inverter 48 on the basis of the voltage control command value Vt_ref.

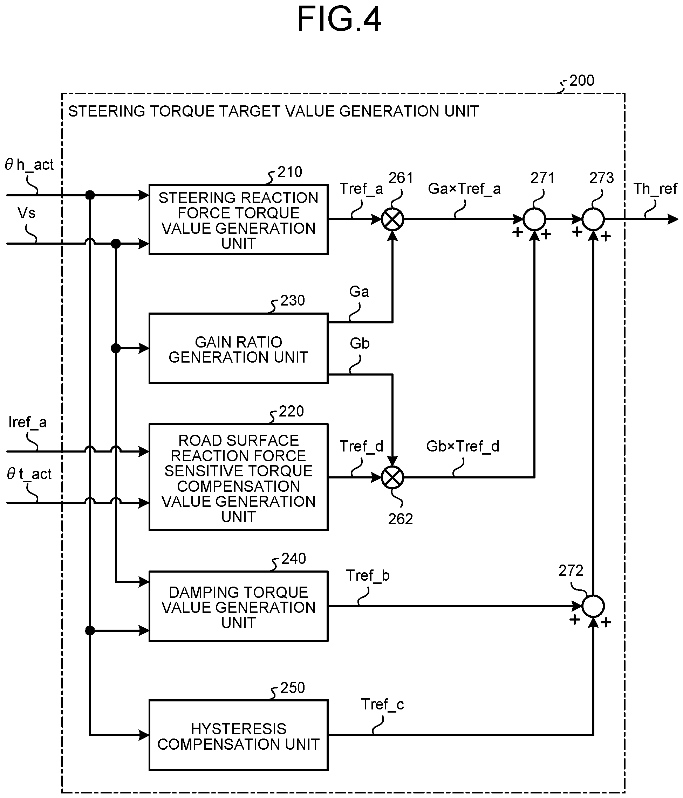

In the present embodiment, each of the steering torque control unit 400, the current control unit 500, the steered angle target value generation unit 600, the steered angle control unit 700, and the current control unit 800 only needs to have a configuration capable of implementing each control in the reaction force control system 60 or the steering control system 70, and is not limited by the configuration of each control block. Hereinafter, a configuration of the steering torque target value generation unit 200 according to the present embodiment will be described with reference to FIG. 4.

FIG. 4 is a block diagram illustrating a configuration example of the steering torque target value generation unit according to the first embodiment. As illustrated in FIG. 4, the steering torque target value generation unit 200 according to the present embodiment includes a steering reaction force torque value generation unit 210, the road surface reaction force sensitive torque compensation value generation unit 220, a gain ratio generation unit 230, a damping torque value generation unit 240, and a hysteresis compensation unit 250 as main components.

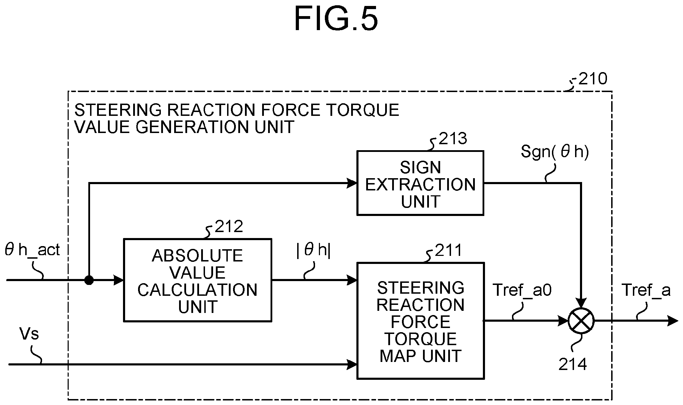

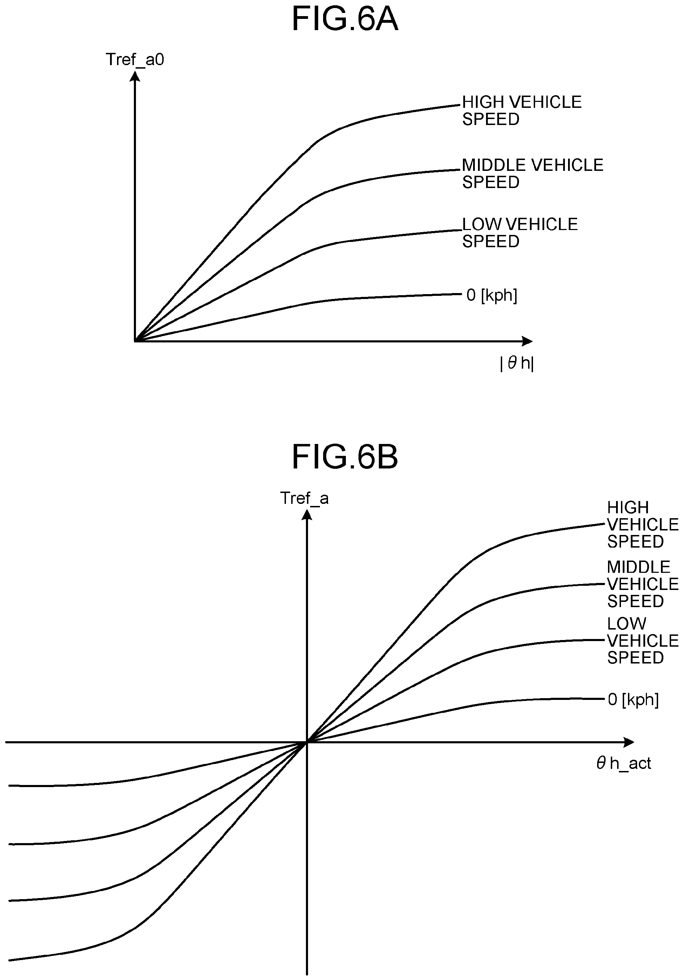

First, the steering reaction force torque value generation unit 210 will be described with reference to FIGS. 5, 6A, and 6B. FIG. 5 is a block diagram illustrating a configuration example of the steering reaction force torque value generation unit.

In the present disclosure, a sign extraction unit 213 illustrated in FIG. 5 extracts the sign of the actual steering angle θh_act. Specifically, for example, the value of the actual steering angle θh_a is divided by the absolute value of the actual steering angle θh_a. Accordingly, the sign extraction unit 213 outputs "1" when the sign of the actual steering angle θh_act is "+", and outputs "-1" when the sign of the actual steering angle θh_act is "-". Specifically, the sign extraction unit 213 generates, for example, a sign function Sgn (θh) of the actual steering angle θh_act.

FIG. 6A is a diagram illustrating a characteristic example of a basic map. A steering angle |θh| subjected to absolute value processing in an absolute value calculation unit 212 and the vehicle speed Vs are input to a steering reaction force torque map unit 211. The steering reaction force torque value generation unit 210 generates a torque value Tref_a0 with the vehicle speed Vs as a parameter using the basic map illustrated in FIG. 6A. The torque value Tref_a0 is used to generate a basic steering reaction force according to the steering angle |θh| and the vehicle speed Vs.

The torque value Tref_a0 has an angle sensitive characteristic that increases or decreases according to the steering angle |θh|. More specifically, as illustrated in FIG. 6A, the torque value Tref_a0 increases as the steering angle |θh| increases. Further, the torque value Tref_a0 has a vehicle speed sensitive characteristic that increases or decreases according to the vehicle speed Vs. More specifically, as illustrated in FIG. 6A, the torque value Tref_a0 increases as the vehicle speed Vs increases. That is, the reaction force obtained by the torque value Tref_a0 derived by the basic map illustrated in FIG. 6A increases as the operation amount (steering angle θh) of the steering wheel 1 by the driver increases, and increases as the speed of the vehicle (vehicle speed Vs) increases. Note that the basic map illustrated in FIG. 6A has a vehicle speed sensitive characteristic, but is not limited thereto.

FIG. 6B is a diagram illustrating a characteristic example of the torque value Tref_a. The torque value Tref_a (first torque value) illustrated in FIG. 6B is obtained by multiplying the torque value Tref_a0 output from the steering reaction force torque map unit 211 by the sign function Sgn (θh) output from the sign extraction unit 213 in a multiplication unit 293. Note that a mode may be employed in which the sign extraction unit 213 is not provided, and the torque value Tref_a (first torque value) is obtained using a basic map corresponding to the positive and negative steering angles θh as illustrated in FIG. 6B.

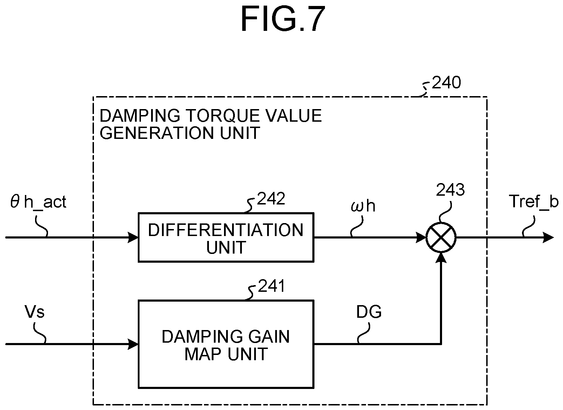

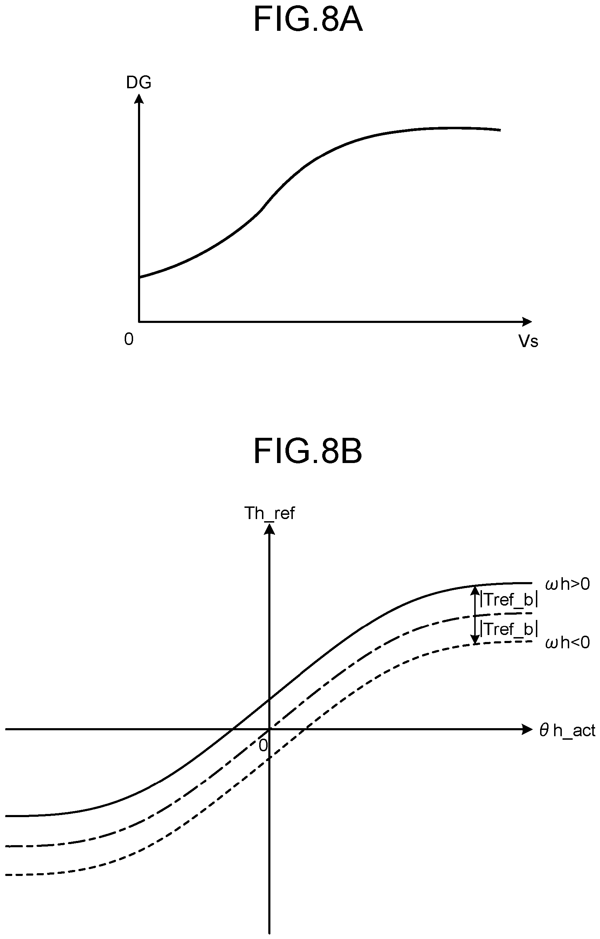

Next, the damping torque value generation unit 240 will be described with reference to FIGS. 7, 8A, and 8B. FIG. 7 is a block diagram illustrating a configuration example of the damping torque value generation unit.

The damping torque value generation unit 240 includes a damping gain map unit 241, a differentiation unit 242, and a multiplication unit 243. FIG. 8A is a diagram illustrating a characteristic example of a damping gain map. The vehicle speed Vs is input to the damping gain map unit 241. The damping gain map unit 241 generates a damping gain DG using the damping gain map illustrated in FIG. 8A.

As illustrated in FIG. 8A, the damping gain DG has a vehicle speed sensitive characteristic that increases or decreases according to the vehicle speed Vs. The damping torque value generation unit 240 multiplies an angular velocity of the steering wheel 1 (hereinafter also referred to as a "steering angular velocity ωh") calculated by differentiating the steering angle θh in the differentiation unit 242 by the damper gain DG output from the damping gain map unit 241 in the multiplication unit 243 and outputs the result as a torque value Tref_b.

By adding the torque value Tref_b output from the damping torque value generation unit 240 to the torque value Tref_a (first torque value) output from the steering reaction force torque value generation unit 210, it is possible to compensate for the steering reaction force proportional to the steering angular velocity ωh.

FIG. 8B is a conceptual diagram illustrating a characteristic example of a torque value Tref_a+Tref_b. In FIG. 8B, a solid line indicates the torque value Tref_a+Tref_b when the steering angular velocity ωh is a positive value (wh > 0), and a broken line indicates the torque value Tref_a+Tref_b when the steering angular velocity ωh is a negative value (ωh < 0). Further, in FIG. 8B, an alternate long and short dash line indicates the torque value Tref_a (first torque value).

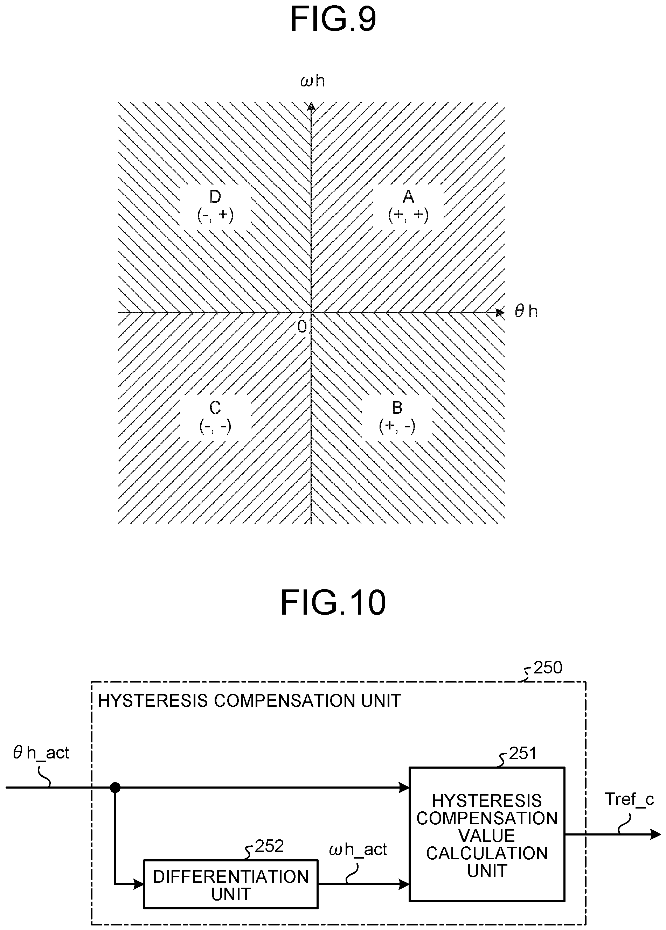

FIG. 9 is a region diagram for describing a steering direction in the present disclosure. In FIG. 9, the horizontal axis represents the steering angle θh, and the vertical axis represents the steering angular velocity ωh.

A region A((θh, ωh) = (+, +)) illustrated in FIG. 9 indicates that, in a state of being turned rightward (θh > 0), the steering wheel 1 is further turned and increased rightward (ωh > 0). A region B((θh, ωh) = (+, -)) illustrated in FIG. 9 indicates that, in a state of being turned rightward (θh > 0), the steering wheel 1 is turned back to the left (ωh < 0). A region C((θh, ωh) = (-, -)) illustrated in FIG. 9 indicates that, in a state of being turned leftward ($\theta h < 0$), the steering wheel 1 is further turned and increased leftward ($\omega h < 0$). A region D(($\theta h$, $\omega h$) = (-, +)) illustrated in FIG. 9 indicates that, in a state of being turned leftward ($\theta h < 0$), the steering wheel 1 is turned back to the right (wh > 0). Further, in FIG. 9, on the steering angle $\theta h$ axis (wh = 0), it is indicated that the steering wheel 1 is neither turned further nor turned back (($\theta h$, $\omega h$) = ($\theta h$, 0)), and on the steering angular velocity $\omega h$ axis ($\theta h$ = 0), it is indicated that the steering wheel 1 is at the center position (($\theta h$, $\omega h$) = (0, $\omega h$)).

The torque value Tref_b output from the damping torque value generation unit 240 is a positive value in the regions A and D where the steering angular velocity $\omega h > 0$, and a negative value in the regions B and C where the steering angular velocity $\omega h < 0$. Thus, in a case where the steering angular velocity $\omega h > 0$, that is, in a state where the steering wheel 1 is turned rightward ($\theta h > 0$), in the region A where the steering wheel 1 is further turned and increased rightward, or in a state where the steering wheel 1 is turned leftward ($\theta h < 0$), in the region D where the steering wheel 1 is turned back to the right, it becomes a value obtained by adding |Tref_b| to Tref_a as indicated by a solid line in FIG. 8B. Further, in a case where the steering angular velocity $\omega h < 0$, that is, in a state where the steering wheel 1 is turned rightward ($\theta h > 0$), in the region B where the steering wheel 1 is turned back to the left, or in a state where the steering wheel 1 is turned leftward ($\theta h < 0$), in the region C where the steering wheel 1 is further turned and increased leftward, it becomes a value obtained by subtracting [Tref_b| from Tref_a as indicated by a broken line in FIG. 8B.

As illustrated in FIG. 8B, in the torque value Tref_a+Tref_b, the magnitude of the steering angle $\theta h$ increases, and as the steering angle $\theta h$ approaches the steering end limited by the stopper (rotation limiting mechanism) 35, the increment of the torque rise with respect to the change in the steering angle $\theta$ decreases. In other words, the torque value Tref_a+Tref_b has a characteristic that the change rate gradually decreases as the steering angle $\theta h$ increases.

Next, the hysteresis compensation unit 250 will be described with reference to FIGS. 10, 11, and 12. FIG. 10 is a block diagram illustrating a configuration example of the hysteresis compensation unit.

To a hysteresis compensation value calculation unit 251, an actual steering speed $\omega h\_act$ calculated by differentiating the actual steering angle $\theta h\_act$ and the actual steering angle $\theta h\_act$ by a differentiation unit 252 is input. The hysteresis compensation value calculation unit 251 calculates a torque compensation value Tref_c on the basis of the actual steering angle $\theta h\_act$ and the actual steering speed $\omega h\_act$. Hereinafter, a calculation method of the torque compensation value Tref_c in the hysteresis compensation value calculation unit 251 will be described.

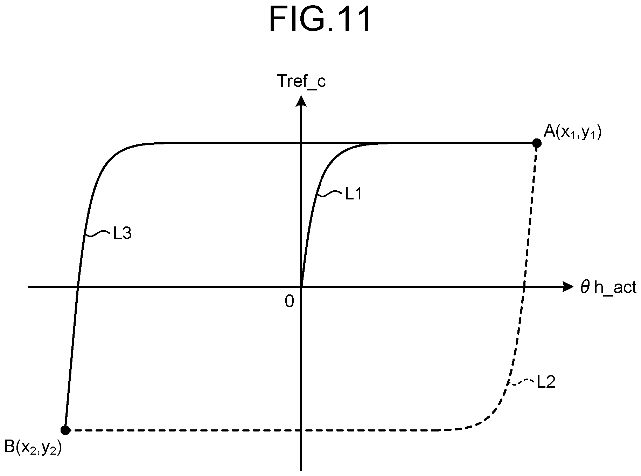

FIG. 11 is a diagram illustrating an example of output characteristics of the hysteresis compensation unit. In FIG. 11, the horizontal axis represents the actual steering angle $\theta h\_act$, and the vertical axis represents the torque compensation value Tref_c. Further, in FIG. 11, a solid line indicates the torque compensation value Tref_c at the time of rightward steering, and a broken line indicates the torque compensation value Tref_c at the time of leftward steering. As illustrated in FIG. 11, the torque compensation value Tref_c calculated by the hysteresis compensation value calculation unit 251 has hysteresis characteristics that differ between when steering to left and when steering to left. L1 illustrated in FIG. 11, represents a locus when rightward steering is performed from the center position (origin (0,0)) of the steering wheel 1, L2 represents a locus when switching from rightward steering to leftward steering occurs at coordinates $A(x_1, y_1)$, and L3 represents a locus when switching from rightward steering to leftward steering occurs at coordinates $B(x_2, y_2)$.

The hysteresis compensation value calculation unit 251 calculates the torque compensation value Tref_c using the following Expressions (1) and (2) on the basis of the actual steering angle $\theta h\_act$ and the actual steering speed $\omega h\_act$. Specifically, when the sign $\omega h\_act(sgn)$ of the actual steering speed $\omega h\_act$ is a positive value ("+"), the torque compensation value Tref_c is calculated using the following Expression (1), and when the sign $\omega h\_act(sgn)$ of the actual steering speed $\omega h\_act$ is a negative value ("-"), the torque compensation value Tref_c is calculated using the following Expression (2). Note that, in the following Expressions (1) and (2), x is the actual steering speed $\omega h\_act$, $y_R$ is the torque compensation value Tref_c at the time of rightward steering, and $y_L$ is the torque compensation value Tref_c at the time of leftward steering. In addition, the coefficient a is a value larger than one, and the coefficient c is a value larger than zero. A coefficient Ahys indicates an output width of the hysteresis characteristic (a width of the torque compensation value Tref_c), and the coefficient c is a coefficient representing roundness of the hysteresis characteristic.

$$y_R = Ahys\{1 - a^{-c(x-b)}\} \tag{1}$$

$$y_L = -Ahys\{1 - a^{c(x-b')}\} \tag{2}$$

That is, the hysteresis compensation value calculation unit 251 calculates the torque compensation value Tref_c($y_R$) using the above Expression (1) at the time of rightward steering (wh_act(sgn) = "+"), and calculates the torque compensation value Tref_c(yL) using the above Expression (2) at the time of leftward steering ($\omega h\_act$ (sgn) = "-").

When switching from the rightward steering to the leftward steering occurs ($\omega h\_act(sgn)$ = "+" → "-") or when switching from the leftward steering to the rightward steering occurs ($\omega h\_act(sgn)$ = "-" → "+"), the hysteresis compensation value calculation unit 251 takes over the previous values of the actual steering angle $\theta h\_act$ and the torque compensation value Tref_c, and substitutes a coefficient b or b' expressed in the following Expression (3) or (4) into the above Expression (1) or (2) applied after the steering switching. This maintains continuity before and after steering switching. Specifically, when switching from rightward steering to leftward steering occurs (wh_act(sgn) = "+" → "-"), the hysteresis compensation value calculation unit 251 applies the previous values (coordinates $A(x_1,y_1)$ illustrated in FIG. 11) of the actual steering angle θh_act and the torque compensation value Tref_c to the above Expression (2), and calculates the torque compensation value Tref_c by substituting the coefficient b' expressed in the following Expression (4). In addition, when the switching from the leftward steering to the rightward steering occurs (ωh_act(sgn) = "-" → "+"), the hysteresis compensation value calculation unit 251 applies the previous values (coordinates $B(x_2,y_2)$ illustrated in FIG. 11) of the actual steering angle θh_act and the torque compensation value Tref_c to the above Expression (1), and substitutes the coefficient b expressed in the following Expression (3) to calculate the torque compensation value Tref_c.

$$b = x_1 + (1/c)\log_a\{1 - (y_1/Ahys)\} \qquad (3)$$

$$b' = x_1 - (1/c)\log_a\{1 - (y_1/Ahys)\} \qquad (4)$$

The above Expressions (3) and (4) can be derived by substituting $x_1$ for x and substituting $y_1$ for $y_R$ and $Y_L$ in the above Expressions (1) and (2).

For example, in a case where the Napier's constant e is used as the coefficient a, the above Expressions (1), (2), (3), and (4) can be expressed by the following Expressions (5), (6), (7), and (8), respectively.

$$y_R = Ahys[1 - exp\{-c(x - b)\}] \qquad (5)$$

$$y_L = -Ahys[\{1 - exp\{c(x - b')\}] \qquad (6)$$

$$b = x_1 + (1/c)\log_e\{1 - (y_1/Ahys)\} \qquad (7)$$

$$b' = x_1 - (1/c)\log_e\{1 - (y_1/Ahys)\} \qquad (8)$$

As described above, the SBW system does not include an intermediate shaft that is mechanically coupled to the column shaft 2. That is, the steering mechanism and the turning mechanism are mechanically separated. For this reason, for example, it is necessary to transmit an oversteer state or an understeer state when the vehicle travels on a low μ road where frictional resistance of the road surface is significantly reduced due to a frozen road surface, a hydroplaning phenomenon in rainy weather, or the like to the reaction force device 30 as a steering reaction force.

In the present disclosure, as illustrated in FIG. 4, a mode is employed in which, as a component of the steering torque target value generation unit 200, a road surface reaction force torque according to the first steering motor current command value Iref_a generated by the steered angle control unit 700 is estimated, and a torque value (second torque value) according to the estimated road surface reaction force torque is applied to the steering torque target value Th_ref. Thus, a steering reaction force corresponding to the estimation value of the road surface reaction force torque can be given to the steering wheel 1. Hereinafter, a configuration and an operation capable of giving a steering reaction force corresponding to an estimation value of a road surface reaction force torque to the steering wheel 1 will be described in detail.

Note that, in a mode in which the steered angle control unit 700 does not include the friction compensation unit, instead of the first steering motor current command value Iref_a in the following description, it is only required to employ a mode in which the road surface reaction force torque according to the second steering motor current command value It_ref is estimated.

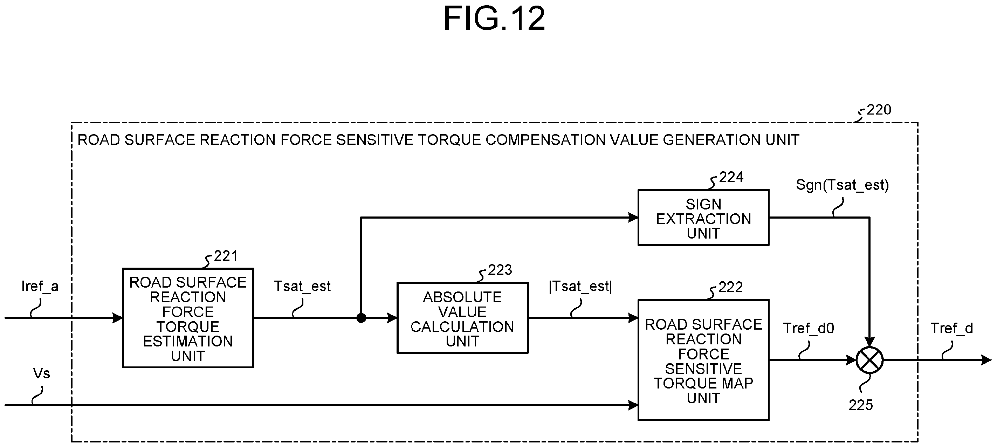

FIG. 12 is a block diagram illustrating a configuration example of a road surface reaction force sensitive torque compensation value generation unit according to the first embodiment. In the configuration example illustrated in FIG. 12, the road surface reaction force sensitive torque compensation value generation unit 220 includes a road surface reaction force torque estimation unit 221 and a road surface reaction force sensitive torque map unit 222 as main components.

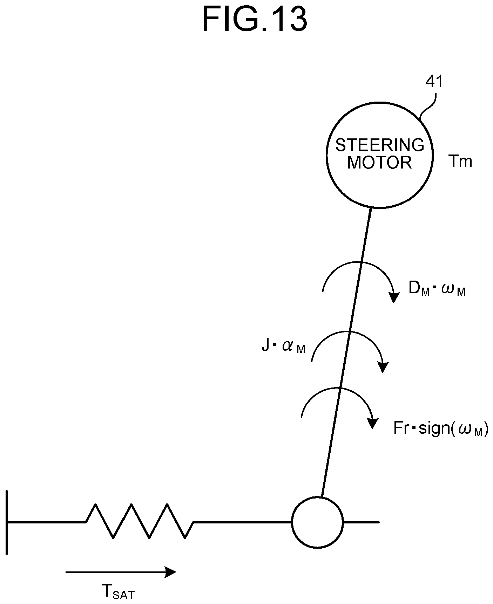

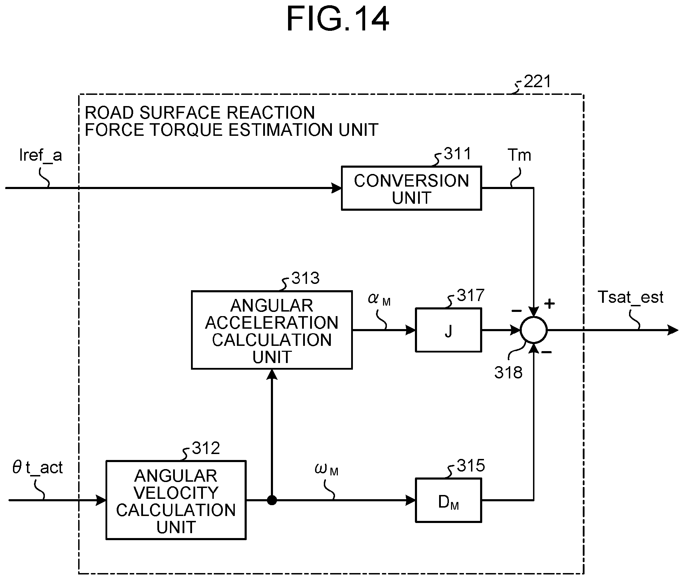

Here, first, an estimation method of a road surface reaction force torque estimation value Tsat_est in the road surface reaction force torque estimation unit 221 will be described with reference to FIGS. 13 and 14.

FIG. 12 is an image diagram illustrating a state of torque generated between the road surface and the steering motor.

The steered angle target value θt_ref is generated when the driver steers the steering wheel, and the steering motor 41 generates a steering motor torque Tm for steering the steered wheels 5L and 5R according to the steered angle target value θt_ref. As a result, the steered wheels 5L and 5R are steered, and a road surface reaction force torque $T_{SAT}$ is generated. At this time, a torque serving as resistance is generated by inertia (pinion shaft conversion inertia) J acting on the pinion shaft by (the rotor of) the steering motor 41, the deceleration mechanism, and the like. Furthermore, a physical torque (viscous torque) expressed as a damper term (damper coefficient $D_M$) is generated by the rotation speed of the steering motor 41. From the balance of these forces, an equation of motion expressed in the following Expression (9) is obtained.

$$J \times \alpha_M + D_M \times \omega_M = Tm - T_{SAT} \qquad (9)$$

In the above Expression (9), $\omega_M$ is a motor angular velocity subjected to pinion shaft conversion (converted into a value with respect to the pinion shaft), and $\alpha_M$ is a motor angular acceleration converted into the pinion shaft. Then, the following Expression (10) is obtained by solving the above Expression (9) for the road surface reaction force torque $T_{SAT}$.

$$T_{SAT} = Tm - J \times \alpha_M - D_M \times \omega_M \qquad (10)$$

As can be seen from the above Expression (10), the road surface reaction force torque $T_{SAT}$ can be calculated from the motor angular velocity $\omega_M$, the motor angular acceleration $\alpha_M$, and the steering motor torque Tm by obtaining the pinion shaft conversion inertia J and the damper coefficient $D_M$ in advance as constants. Note that the pinion shaft conversion inertia J may be a value that is subjected to pinion shaft conversion simply using a relational expression between the motor inertia and the reduction ratio.

The first steering motor current command value Iref_a and the actual steered angle θt_act generated by the steered angle control unit 700 are input to the road surface reaction force torque estimation unit 221. The road surface reaction force torque estimation unit 221 calculates the road surface reaction force torque estimation value Tsat_est by replacing the road surface reaction force torque $T_{SAT}$ of the above Expression (10) with the road surface reaction force torque estimation value Tsat_est.

FIG. 14 is a block diagram illustrating a configuration example of the road surface reaction force torque estimation unit. The road surface reaction force torque estimation unit 221 includes a conversion unit 311, an angular velocity calculation unit 312, an angular acceleration calculation unit 313, a block 315, a block 317, and a subtraction unit 318.

The first steering motor current command value Iref_a is input to the conversion unit 311. The conversion unit 311 calculates the steering motor torque Tm subjected to the pinion shaft conversion by multiplying a gear ratio and a torque constant determined in advance.

The actual steered angle θt_act is input to the angular velocity calculation unit 312. The angular velocity calculation unit 312 converts the actual steered angle θt_act into the angle of the steering motor 41, performs differential calculation processing on the angle of the steering motor 41, and further calculates the motor angular velocity $\omega_M$ subjected to the pinion shaft conversion by division by the gear ratio.

To the angular acceleration calculation unit 313, the motor angular velocity $\omega_M$ is input. The angular acceleration calculation unit 313 differentiates the motor angular velocity $\omega_M$ and calculates the motor angular acceleration $\alpha_M$ subjected to the pinion shaft conversion.

Then, by using the steering motor torque Tm, the motor angular velocity $\omega_M$, and the motor angular acceleration $\alpha_M$, the road surface reaction force torque estimation value Tsat_est is calculated on the basis of the above Expression (10) with the configuration illustrated in FIG. 14.

The motor angular velocity $\omega_M$ output from the angular velocity calculation unit 312 is input to the block 315. The block 315 multiplies the input data by the damper coefficient $D_M$ and outputs the result.

The motor angular acceleration $\alpha_M$ output from the angular acceleration calculation unit 313 is input to the block 317. The block 317 multiplies the input data by the pinion shaft conversion inertia J and outputs the result.

The subtraction unit 318 subtracts the output of the block 317 and the output of the block 315 from the steering motor torque Tm output from the conversion unit 311.

With the above configuration, the above Expression (10) can be implemented. That is, the road surface reaction force torque estimation value Tsat_est is calculated by the configuration of the road surface reaction force torque estimation unit 221 illustrated in FIG. 14.

Note that, in a mode of detecting the angle of the steering motor 41, the angular velocity calculation unit 312 performs differential calculation processing on the detected angle of the steering motor 41, and further calculates the motor angular velocity $\omega_M$ subjected to the pinion shaft conversion by division by the gear ratio. In a case where the column angle can be directly detected, the column angle may be used as angle information instead of the actual steered angle θt_act or the angle of the steering motor 41. In this case, the pinion shaft conversion is unnecessary. Instead of the actual steered angle θt_act or the angle of the steering motor 41, a signal obtained by subjecting the steering angular velocity or the steering motor angular velocity to the pinion shaft conversion may be input as the motor angular velocity $\omega_M$, and the differential processing with respect to the angle of the steering motor 41 may be omitted. Furthermore, the road surface reaction force torque estimation value Tsat_est may be calculated by a method other than the above, or an estimation value corresponding to the road surface reaction force torque estimation value Tsat_est may be used. Hereinafter, a calculation method of the road surface reaction force torque estimation value Tsat_est different from the above method will be described.

In the calculation method of the road surface reaction force torque estimation value Tsat_est different from the above method, the first steering motor current command value Iref_a generated by the steered angle control unit 700 is input to the road surface reaction force torque estimation unit 221. In addition, a transfer function Gfil expressed in the following Expression (11) is set in the road surface reaction force torque estimation unit 221. The transfer function Gfil is stored in, for example, the ROM of the ECU constituting the control device 50.

$$\text{Gfil} = \text{N(s)}/\text{D(s)} = (\text{Ds} + \text{E})/(\text{As}^2 + \text{Bs} + \text{C}) \qquad (11)$$

A, B, C, D, and E in a linear function N(s) = Ds + E and a quadratic function D(s) = As$^2$ + Bs + C in the above Expression (11) are coefficients set by the following simulation.

Note that, in the present disclosure, the transfer functions of the first order numerator and the second order denominator are assumed as the transfer function Gfil, but the orders of the numerator and denominator can be appropriately changed according to the allowable amount of error between an actual road surface reaction force torque Tsat_act and the road surface reaction force torque estimation value Tsat_est, the load of the ECU, and the like.

For example, in a case where the orders of the numerator and denominator are increased, the relationship between the first steering motor current command value) Iref_a and the actual road surface reaction force torque Tsat_act obtained by an experiment to be described later and the transfer characteristic of the transfer function Gfil can be favorably matched, so that the road surface reaction force torque estimation value Tsat_est close to the actual measured value can be estimated.

On the other hand, when the orders of the numerator and denominator is reduced, the load on the ECU can be reduced.

It is assumed that a relational expression expressed in the following Expression (12) is established between the road surface reaction force torque $T_{SAT}$ and the first steering motor current command value Iref_a. The road surface reaction force torque $T_{SAT}$ expressed by the following Expression (12) is set as the road surface reaction force torque estimation value Tsat_est in the present disclosure.

In other words, the transfer function Gfil calculates the road surface reaction force torque estimation value Tsat_est from the first steering motor current command value Iref_a by simulating the relationship between the first steering motor current command value Iref_a obtained by an experiment and the actual road surface reaction force torque Tsat_act.

$$T_{SAT} = \text{Gfil}\times\text{Iref\_a} = \text{Tsat\_est} \qquad (12)$$

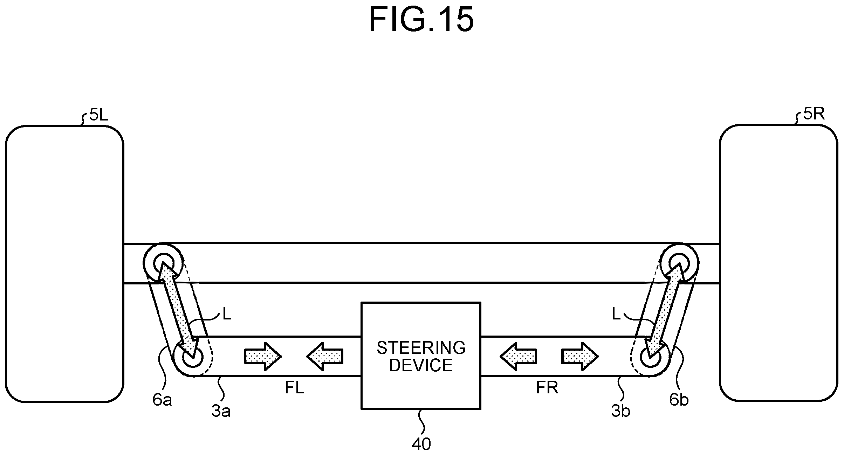

On the other hand, the actual road surface reaction force torque Tsat_act acting on the turning mechanism can be calculated from the axial force applied to the tie rod. FIG. 15 is a conceptual diagram for describing a method of calculating the actual road surface reaction force torque acting on the turning mechanism.

The actual road surface reaction force torque Tsat_act can be calculated by the following Expression (13) using axial forces FL and FR applied to the tie rods 3a and 3b and lengths L of arms 6a and 6b determined for each vehicle type.

$$\text{Tsat\_act} = \text{FL} \times \text{L} - \text{FR} \times \text{L} \qquad (13)$$

In the present disclosure, the actual road surface reaction force torque Tsat_act is calculated using the above Expression (13) using the axial forces FL and FR measured in advance by an experiment using an actual vehicle. The axial forces FL and FR can be measured, for example, by attaching force sensors to the tie rods 3a and 3b.

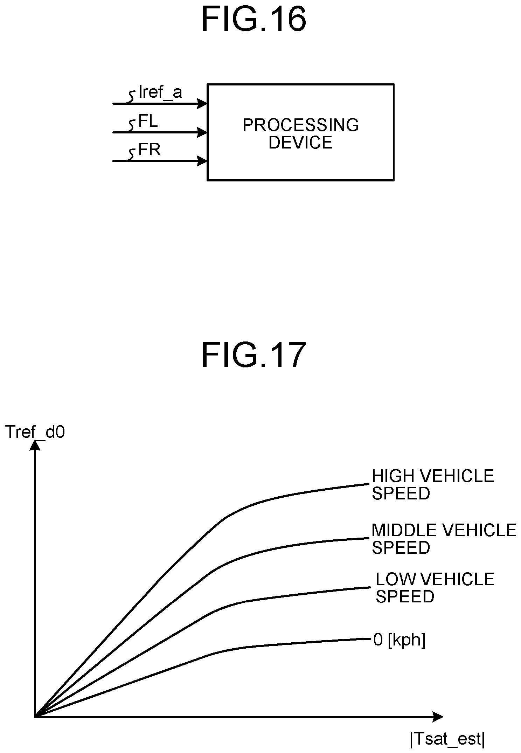

FIG. 16 is a conceptual diagram illustrating a configuration for executing a simulation for deriving the transfer function Gfil.

The first steering motor current command value Iref_a and the axial forces FL and FR are input to a processing device illustrated in FIG. 16. In the processing device, the transfer function Gfil is derived so that the road surface reaction force torque estimation value Tsat_est expressed by the above Expression (12) approximates the actual road surface reaction force torque Tsat_act calculated by the above Expression (13). As the processing device illustrated in FIG. 16, for example, a mode may be employed in which a frequency characteristic analysis device (servo analyzer).

Specifically, the processing device executes curve fitting using a sweep method to derive the coefficients A, B, C, D, and E of the transfer function Gfil expressed by the above Expression (11). As an example of the curve fitting method, for example, a least square approximation method can be used. Note that the curve fitting method is not limited to the least square approximation method.

The road surface reaction force torque estimation unit 221 performs filter processing on the first steering motor current command value Iref_a generated by the steered angle control unit 700 using the transfer function Gfil derived as described above, and calculates the road surface reaction force torque estimation value Tsat_est expressed by the above Expression (12). Thus, the road surface reaction force torque estimation value Tsat_est corresponding to the behavior of the actual road surface reaction force torque Tsat_act when the vehicle actually travels is obtained.

Note that the transfer function used when the road surface reaction force torque estimation unit 221 calculates the road surface reaction force torque estimation value Tsat_est is not limited to the mode illustrated in (11) above. Specifically, for example, the present disclosure is not limited by the order of the function N(s) or the function D(s).

Returning to FIG. 12, a sign extraction unit 224 extracts the sign of the road surface reaction force torque estimation value Tsat_est obtained by the above-described calculation method. Specifically, for example, the value of the road surface reaction force torque estimation value Tsat_est is divided by the absolute value of the road surface reaction force torque estimation value Tsat_est. Accordingly, the sign extraction unit 224 outputs "1" when the sign of the road surface reaction force torque estimation value Tsat_est is "+", and outputs "-1" when the sign of the road surface reaction force torque estimation value Tsat_est is "-". Specifically, the sign extraction unit 224 generates, for example, a sign function Sgn(Tsat_est) of the road surface reaction force torque estimation value Tsat_est.

FIG. 17 is a diagram illustrating a characteristic example of the road surface reaction force sensitive torque map. The road surface reaction force torque estimation value |Tsat_est| and the vehicle speed Vs subjected to the absolute value processing in an absolute value calculation unit 223 are input to the road surface reaction force sensitive torque map unit 222. The road surface reaction force sensitive torque map unit 222 to generate a torque value Tref_d0 with the vehicle speed Vs as a parameter using the road surface reaction force sensitive torque map illustrated in FIG. 17.

As illustrated in FIG. 17, the torque value Tref_d0 has a torque sensitive characteristic that increases or decreases according to the road surface reaction force torque estimation value |Tsat_est|.

More specifically, the torque value Tref_d0 increases as the road surface reaction force torque estimation value |Tsat_est| increases, and the increase rate decreases as the road surface reaction force torque estimation value |Tsat_est| increases.

Further, the torque value Tref_d0 has a vehicle speed sensitive characteristic that increases or decreases according to the vehicle speed Vs. More specifically, the torque value Tref_d0 increases as the vehicle speed Vs increases as illustrated in FIG. 17.

That is, the reaction force obtained by the torque value Tref_d0 derived by the road surface reaction force sensitive torque map illustrated in FIG. 17 increases as the road surface reaction force torque estimation value |Tsat_est| increases, and increases as the speed (vehicle speed Vs) of the vehicle increases. Note that the road surface reaction force sensitive torque map illustrated in FIG. 17 is in a mode of having the vehicle speed sensitive characteristic, but is not limited thereto.

The road surface reaction force sensitive torque compensation value generation unit 220 outputs a torque value Tref_d (second torque value) obtained by multiplying the torque value Tref_d0, which is an output value of the road surface reaction force sensitive torque map unit 222, by the sign function Sgn(Tsat_est) of the road surface reaction force torque estimation value Tsat_est in a multiplication unit 225 and performing sign conversion.

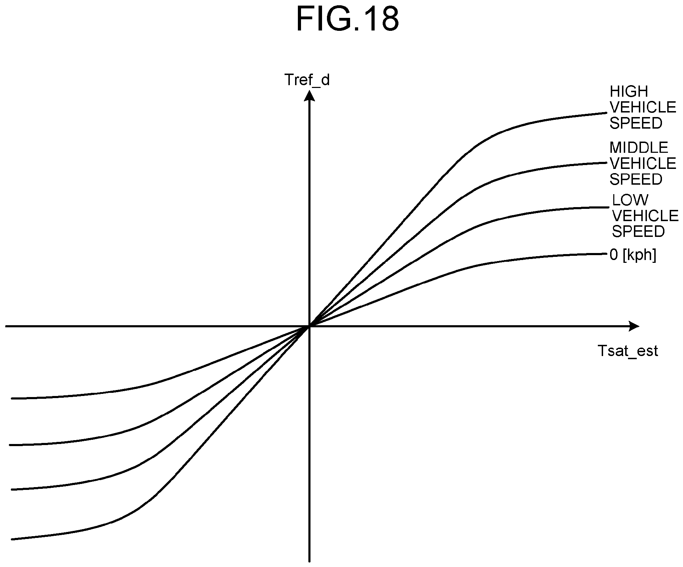

FIG. 18 is a diagram conceptually illustrating a characteristic example of the second torque value after the sign conversion. As illustrated in FIG. 18, the torque value Tref_d (second torque value) output from the road surface reaction force sensitive torque compensation value generation unit 220 increases or decreases according to the road surface reaction force torque estimation value Tsat_est, which is an estimation value of the reaction force (self-aligning torque) acting from the road surface. By applying the torque value Tref_d (second torque value) that increases or decreases according to the road surface reaction force torque estimation value Tsat_est to the steering torque target value Th_ref, it is possible to obtain the steering reaction force according to the road surface reaction force torque estimation value Tsat_est.

Note that the characteristics of the road surface reaction force sensitive torque map are not limited to the mode illustrated in FIG. 17 or 18 described above. Furthermore, for example, instead of the mode of the map illustrated in FIG. 17 or 18, a mode in which a characteristic is defined by a predetermined transfer function may be used.

Here, the road surface reaction force torque estimation value Tsat_est changes depending on the state of the vehicle such as the vehicle speed and the steering angle in addition to the situation of the road surface. For this reason, the situation of the road surface cannot be sufficiently reflected depending on the state of the vehicle, and the steering feeling according to the situation of the road surface or the state of the vehicle may not be obtained.

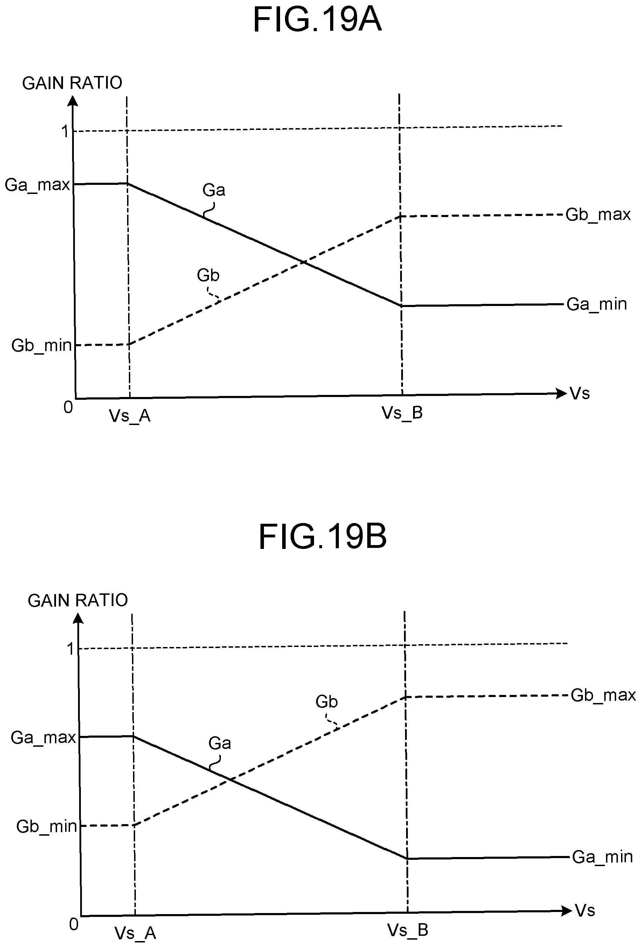

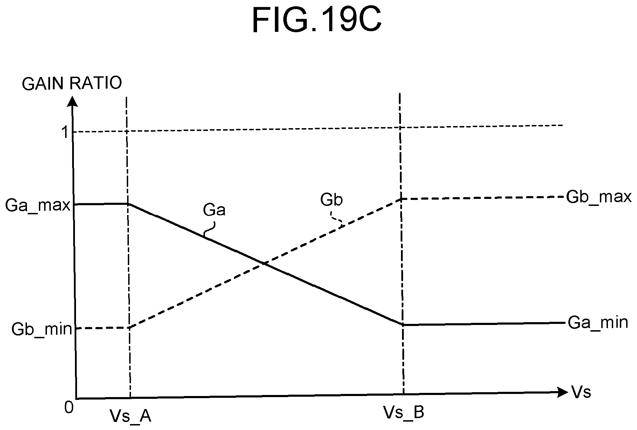

Hereinafter, a configuration and an operation according to the first embodiment capable of imparting a steering feeling according to the situation of the road surface and the state of the vehicle will be described with reference to FIGS. 4, 19A, 19B, and 19C. FIG. 19A is a diagram conceptually illustrating a first example of a gain ratio setting example in the gain ratio generation unit according to the first embodiment. FIG. 19B is a diagram conceptually illustrating a second example of the gain ratio setting example in the gain ratio generation unit according to the first embodiment. FIG. 19C is a diagram conceptually illustrating a third example of the gain ratio setting example in the gain ratio generation unit according to the first embodiment.

In the present embodiment, a first gain Ga and a second gain Gb are generated using the vehicle speed Vs as a parameter. As illustrated in FIG. 4, the vehicle speed Vs is input to the gain ratio generation unit 230 of the steering torque target value generation unit 200 according to the first embodiment. The gain ratio generation unit 230 generates the first gain Ga that increases or decreases according to the vehicle speed Vs and the second gain Gb that causes the sum of the first gain Ga and the second gain Gb to be one. The first gain Ga is multiplied by the torque value Tref_a (first torque value) by a multiplication unit 261. The second gain Gb is multiplied by the torque value Tref_d (second torque value) by a multiplication unit 262.

The gain ratio generation unit 230 monotonically decreases the first gain Ga to be multiplied by the torque value Tref_a (first torque value) within a range from a first vehicle speed Vs_A or more to a second vehicle speed Vs_B or less. Accordingly, the second gain Gb to be multiplied by the torque value Tref_d (second torque value) monotonically increases within the range from the first vehicle speed Vs_A or more to the second vehicle speed Vs_B or less. The first vehicle speed Vs_A is, for example, 5 [km/h]. The second vehicle speed Vs_B is, for example, 30 [km/h]. The present disclosure is not limited by the values of the first vehicle speed Vs_A and the second vehicle speed Vs_B.

FIG. 19A illustrates an example in which a maximum value Ga_max of the first gain Ga in a range equal to or less than the first vehicle speed Vs_A is larger than a maximum value Gb_max of the second gain Gb in a range equal to or more than the second vehicle speed Vs_B. In this case, a minimum value Gb_min of the second gain Gb in the range equal to or less than the first vehicle speed Vs_A is larger than a minimum value Ga_min of the first gain Ga in the range equal to or more than the second vehicle speed Vs_B.

FIG. 19B illustrates an example in which the maximum value Ga_max of the first gain Ga in the range equal to or less than the first vehicle speed Vs_A is smaller than the maximum value Gb_max of the second gain Gb in the range equal to or more than the second vehicle speed Vs_B. In this case, the minimum value Gb_min of the second gain Gb in the range equal to or less than the first vehicle speed Vs_A is smaller than the minimum value Ga_min of the first gain Ga in the range equal to or more than the second vehicle speed Vs_B.

FIG. 19C illustrates an example in which the maximum value Ga_max of the first gain Ga in the range equal to or less than the first vehicle speed Vs_A is equal to the maximum value Gb_max of the second gain Gb in the range equal to or more than the second vehicle speed Vs_B. In this case, the minimum value Gb_min of the second gain Gb in the range equal to or less than the first vehicle speed Vs_A is equal to the minimum value Ga_min of the first gain Ga in the range equal to or more than the second vehicle speed Vs_B.

Each value and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set according to the motion performance, vehicle specifications, and the like of the vehicle on which the control device 50 according to the present disclosure is mounted.

The steering torque target value generation unit 200 adds (addition units 271, 272, and 273) a torque value Ga×Tref_a obtained by multiplying the torque value Tref_a (first torque value) output from the steering reaction force torque value generation unit 210 by the first gain Ga (multiplication unit 261), Gb×Tref_d obtained by multiplying the torque value Tref_d (second torque value) output from the road surface reaction force sensitive torque compensation value generation unit 220 by the second gain Gb (multiplication unit 262), a torque value Tref_b output from the damping torque value generation unit 240, and a torque compensation value Tref_c output from the hysteresis compensation unit 250, and outputs a result as the steering torque target value Th_ref.

In the first embodiment, a steering reaction force corresponding to the road surface reaction force torque estimation value Tsat_est can be given to the steering wheel 1 at a ratio corresponding to the vehicle speed Vs. Specifically, the steering torque target value generation unit 200 generates the steering torque target value Th_ref by multiplying the torque value Tref_a (first torque value) output from the steering reaction force torque value generation unit 210 by a relatively large first gain Ga in a region where the vehicle speed Vs is relatively small, and generates the steering torque target value Th_ref by multiplying the torque value Tref_d (second torque value) output from the road surface reaction force sensitive torque compensation value generation unit 220 by a relatively large second gain Gb in a region where the vehicle speed Vs is relatively large. In a low-speed region where the vehicle speed Vs is relatively small, the component of the reaction torque due to the elastic deformation of the tires is the main component of the road surface reaction force torque, and the proportion of the reaction torque component due to the road surface condition to the road surface reaction force torque is small. That is, when the output of the road surface reaction force sensitive torque generation unit 220 is relatively increased in the low speed region, although it is difficult to obtain the road surface condition, a heavy steering torque is given, so that the driver's steering feeling is deteriorated. Thus, in the low-speed region where the vehicle speed Vs is relatively small, the steering feeling reflecting the situation of the road surface and the vehicle speed Vs can be obtained by using the relatively large first gain Ga and the relatively small gain Gb.

Note that the gain ratio setting example in the gain ratio generation unit 230 according to the first embodiment is an example, and is not limited to the modes illustrated in FIGS. 19A, 19B, and 19C described above. For example, a mode may be employed in which, within the range from the first vehicle speed Vs_A or more to the second vehicle speed Vs_B or less, the first gain Ga to be multiplied by the torque value Tref_a (first torque value) gradually decreases as the vehicle speed Vs increases, and accordingly, the second gain Gb to be multiplied by the torque value Tref_d (second torque value) gradually increases as the vehicle speed Vs increases. Further, for example, a mode may be employed in which, within the range from the first vehicle speed Vs_A or more to the second vehicle speed Vs_B or less, the first gain Ga to be multiplied by the torque value Tref_a (first torque value) gradually increases as the vehicle speed Vs decreases, and accordingly, the second gain Gb to be multiplied by the torque value Tref_d (second torque value) gradually decreases as the vehicle speed Vs decreases.

(Second Embodiment)

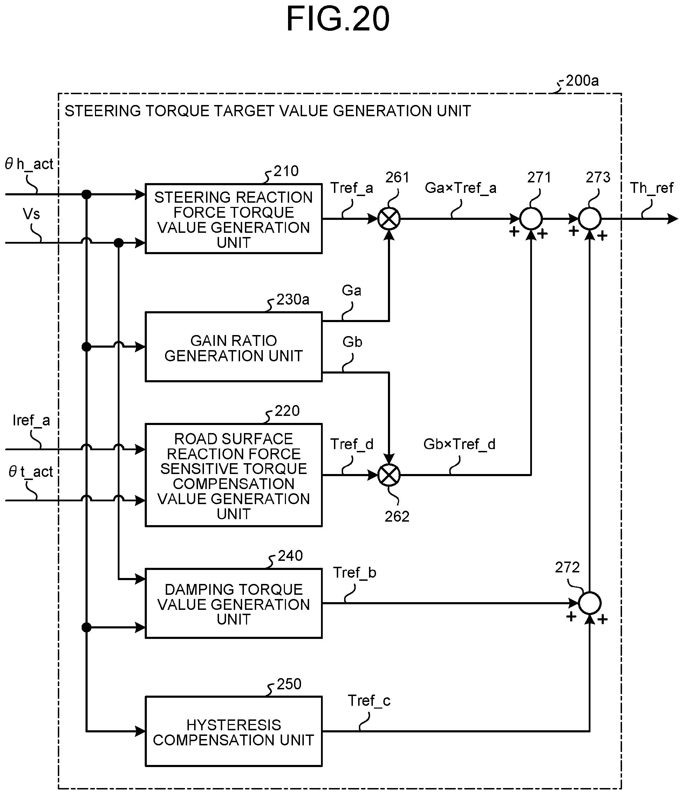

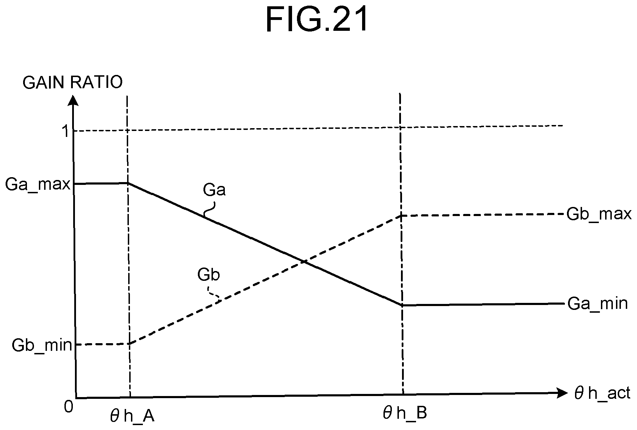

Hereinafter, a configuration and an operation according to a second embodiment capable of imparting a steering feeling according to the situation of the road surface and the state of the vehicle will be described with reference to FIGS. 20 and 21. FIG. 20 is a block diagram illustrating a configuration example of a steering torque target value generation unit according to the second embodiment. FIG. 21 is a diagram conceptually illustrating an example of a gain ratio setting example in the gain ratio generation unit according to the second embodiment.

In the present embodiment, a first gain Ga and a second gain Gb are generated using the actual steering angle θh_act as a parameter. As illustrated in FIG. 20, the actual steering angle θh_act is input to a gain ratio generation unit 230a of a steering torque target value generation unit 200a according to the second embodiment. The gain ratio generation unit 230a generates the first gain Ga that increases or decreases according to the actual steering angle θh_act and the second gain Gb that causes the sum of the first gain Ga and the second gain Gb to be one. The first gain Ga is multiplied by the torque value Tref_a (first torque value) by the multiplication unit 261. The second gain Gb is multiplied by the torque value Tref_d (second torque value) by the multiplication unit 262.

The gain ratio generation unit 230a monotonically decreases the first gain Ga to be multiplied by the torque value Tref_a (first torque value) within the range from the first steering angle θh_A or more to the second steering angle θh_B or less. Accordingly, the second gain Gb to be multiplied by the torque value Tref_d (second torque value) monotonically increases within the range from the first steering angle θh_A or more to the second steering angle θh_B or less. The first steering angle θh_A is, for example, three [deg]. The second steering angle θh_B is, for example, 20 [deg]. The present disclosure is not limited by the respective values of the first steering angle θh_A and the second steering angle θh_B.

FIG. 21 illustrates an example in which the maximum value Ga_max of the first gain Ga in a range equal to or less than the first steering angle θh_A is larger than the maximum value Gb_max of the second gain Gb in a range equal to or more than the second steering angle θh_B. In this case, the minimum value Gb_min of the second gain Gb in the range equal to or less than the first steering angle θh_A is larger than the minimum value Ga_min of the first gain Ga in the range equal to or more than the second steering angle θh_B.

Note that a mode may be employed in which the maximum value Ga_max of the first gain Ga in the range equal to or less than the first steering angle θh_A is smaller than the maximum value Gb_max of the second gain Gb in the range equal to or more than the second steering angle θh_B, and the minimum value Gb_min of the second gain Gb in the range equal to or less than the first steering angle θh_A is smaller than the minimum value Ga_min of the first gain Ga in the range equal to or more than the second steering angle θh_B.

Further, a mode may be employed in which the maximum value Ga_max of the first gain Ga in the range equal to or less than the first steering angle θh_A is equal to the maximum value Gb_max of the second gain Gb in the range equal to or more than the second steering angle θh_B, and the minimum value Gb_min of the second gain Gb in the range equal to or less than the first steering angle θh_A is equal to the minimum value Ga_min of the first gain Ga in the range equal to or more than the second steering angle θh_B.

Each value and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set according to the motion performance, vehicle specifications, and the like of the vehicle on which the control device 50 according to the present disclosure is mounted.

The steering torque target value generation unit 200a adds (addition units 271, 272, and 273) a torque value Ga×Tref_a obtained by multiplying the torque value Tref_a (first torque value) output from the steering reaction force torque value generation unit 210 by the first gain Ga (multiplication unit 261), Gb×Tref_d obtained by multiplying the torque value Tref_d (second torque value) output from the road surface reaction force sensitive torque compensation value generation unit 220 by the second gain Gb (multiplication unit 262), a torque value Tref_b output from the damping torque value generation unit 240, and a torque compensation value Tref_c output from the hysteresis compensation unit 250, and outputs a result as the steering torque target value Th_ref.

In the second embodiment, a steering reaction force corresponding to the road surface reaction force torque estimation value Tsat_est can be given to the steering wheel 1 at a ratio corresponding to the actual steering angle θh_act. Specifically, the steering torque target value generation unit 200a generates the steering torque target value Th_ref by multiplying the torque value Tref_a (first torque value) output from the steering reaction force torque value generation unit 210 by a relatively large first gain Ga in a region where the actual steering angle θh_act is relatively small, and generates the steering torque target value Th_ref by multiplying the torque value Tref_d (second torque value) output from the road surface reaction force sensitive torque compensation value generation unit 220 by a relatively large second gain Gb in a region where the actual steering angle $\theta$h_act is relatively large. Thus, it is possible to obtain a steering feeling reflecting the situation of the road surface and the actual steering angle $\theta$h_act.

Note that the gain ratio setting example in the gain ratio generation unit 230a according to the second embodiment is an example, and is not limited to the mode illustrated in FIG. 21 described above. For example, a mode may be employed in which, within the range from the first steering angle $\theta$h_A or more to the second steering angle $\theta$h_B or less, the first gain Ga to be multiplied by the torque value Tref_a (first torque value) gradually decreases as the actual steering angle $\theta$h_act increases, and accordingly, the second gain Gb to be multiplied by the torque value Tref_d (second torque value) gradually increases as the actual steering angle $\theta$h_act increases. Further, for example, a mode may be employed in which, within the range from the first steering angle $\theta$h_A or more to the second steering angle $\theta$h_B or less, the first gain Ga to be multiplied by the torque value Tref_a (first torque value) gradually increases as the actual steering angle $\theta$h_act decreases, and accordingly, the second gain Gb to be multiplied by the torque value Tref_d (second torque value) gradually decreases as the actual steering angle $\theta$h_act decreases.

(Third Embodiment)

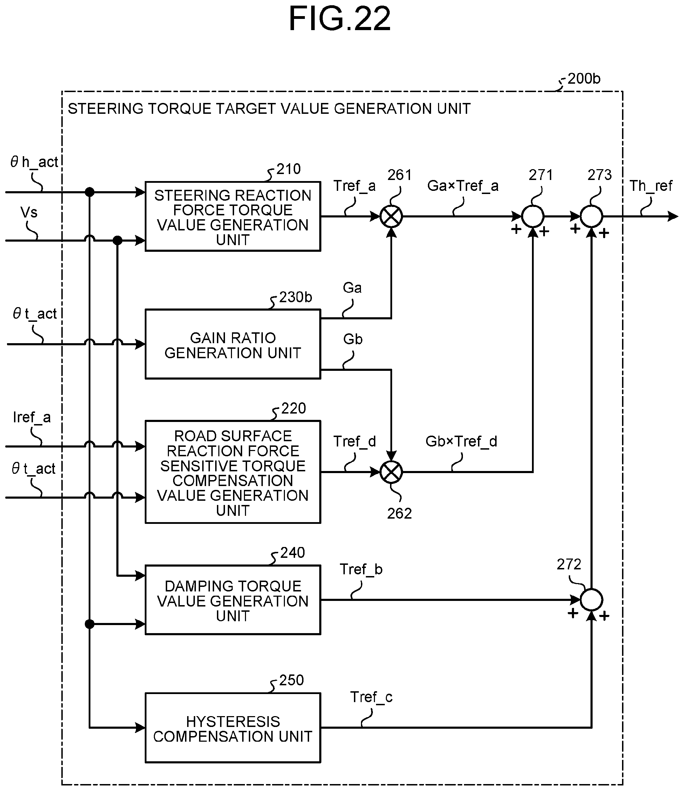

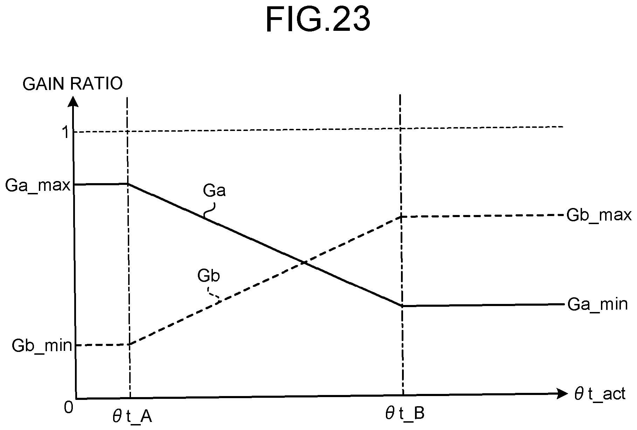

Hereinafter, a configuration and an operation according to a third embodiment capable of imparting a steering feeling according to the situation of the road surface and the state of the vehicle will be described with reference to FIGS. 22 and 23. FIG. 22 is a block diagram illustrating a configuration example of a steering torque target value generation unit according to the third embodiment. FIG. 23 is a diagram conceptually illustrating an example of a gain ratio setting example in the gain ratio generation unit according to the third embodiment.

In the present embodiment, a first gain Ga and a second gain Gb are generated using the actual steered angle $\theta$t_act as a parameter. As illustrated in FIG. 22, the actual steered angle $\theta$t_act is input to a gain ratio generation unit 230b of a steering torque target value generation unit 200b according to the third embodiment. The gain ratio generation unit 230b generates the first gain Ga that increases or decreases according to the actual steered angle $\theta$t_act and the second gain Gb that causes the sum of the first gain Ga and the second gain Gb to be one. The first gain Ga is multiplied by the torque value Tref_a (first torque value) by the multiplication unit 261. The second gain Gb is multiplied by the torque value Tref_d (second torque value) by the multiplication unit 262.

The gain ratio generation unit 230b monotonically decreases the first gain Ga to be multiplied by the torque value Tref_a (first torque value) within a range from the first steered angle $\theta$t_A or more to the second steered angle $\theta$t_B or less. Accordingly, the second gain Gb to be multiplied by the torque value Tref_d (second torque value) monotonically increases within the range from the first steered angle $\theta$t_A or more to the second steered angle $\theta$t_B or less. The first steered angle $\theta$t_A is, for example, three [deg]. The second steered angle $\theta$t_B is, for example, 20 [deg]. The present disclosure is not limited by the respective values of the first steered angle $\theta$t_A and the second steered angle $\theta$t_B.

FIG. 23 illustrates an example in which the maximum value Ga_max of the first gain Ga in a range equal to or less than the first steered angle $\theta$t_A is larger than the maximum value Gb_max of the second gain Gb in a range equal to or more than the second steered angle $\theta$t_B. In this case, the minimum value Gb_min of the second gain Gb in the range equal to or less than the first steered angle $\theta$t_A is larger than the minimum value Ga_min of the first gain Ga in the range equal to or more than the second steered angle $\theta$t_B.

Note that a mode may be employed in which the maximum value Ga_max of the first gain Ga in the range equal to or less than the first steered angle $\theta$t_A is smaller than the maximum value Gb_max of the second gain Gb in the range equal to or more than the second steered angle $\theta$t_B, and the minimum value Gb_min of the second gain Gb in the range equal to or less than the first steered angle $\theta$t_A is smaller than the minimum value Ga_min of the first gain Ga in the range equal to or more than the second steered angle $\theta$t_B.

Further, a mode may be employed in which the maximum value Ga_max of the first gain Ga in the range equal to or less than the first steered angle $\theta$t_A is equal to the maximum value Gb_max of the second gain Gb in the range equal to or more than the second steered angle $\theta$t_B, and the minimum value Gb_min of the second gain Gb in the range equal to or less than the first steered angle $\theta$t_A is equal to the minimum value Ga_min of the first gain Ga in the range equal to or more than the second steered angle $\theta$t_B.

Each value and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set according to the motion performance, vehicle specifications, and the like of the vehicle on which the control device 50 according to the present disclosure is mounted.

The steering torque target value generation unit 200b adds (addition units 271, 272, and 273) a torque value Ga×Tref_a obtained by multiplying the torque value Tref_a (first torque value) output from the steering reaction force torque value generation unit 210 by the first gain Ga (multiplication unit 261), Gb×Tref_d obtained by multiplying the torque value Tref_d (second torque value) output from the road surface reaction force sensitive torque compensation value generation unit 220 by the second gain Gb (multiplication unit 262), a torque value Tref_b output from the damping torque value generation unit 240, and a torque compensation value Tref_c output from the hysteresis compensation unit 250, and outputs a result as the steering torque target value Th_ref.

In the third embodiment, a steering reaction force corresponding to the road surface reaction force torque estimation value Tsat_est can be given to the steering wheel 1 at a ratio corresponding to the actual steered angle θt_act. Specifically, the steering torque target value generation unit 200b generates the steering torque target value Th_ref by multiplying the torque value Tref_a (first torque value) output from the steering reaction force torque value generation unit 210 by a relatively large first gain Ga in a region where the actual steered angle θt_act is relatively small, and generates the steering torque target value Th_ref by multiplying the torque value Tref_d (second torque value) output from the road surface reaction force sensitive torque compensation value generation unit 220 by a relatively large second gain Gb in a region where the actual steered angle θt_act is relatively large. Thus, it is possible to obtain a steering feeling reflecting the situation of the road surface and the actual steered angle θt_act.

Note that the gain ratio setting example in the gain ratio generation unit 230b according to the third embodiment is an example, and is not limited to the mode illustrated in FIG. 23 described above. For example, a mode may be employed in which, within the range from the first steered angle θt_A or more to the second steered angle θt_B or less, the first gain Ga to be multiplied by the torque value Tref_a (first torque value) gradually decreases as the actual steered angle θt_act increases, and accordingly, the second gain Gb to be multiplied by the torque value Tref_d (second torque value) gradually increases as the actual steered angle θt_act increases. Further, for example, a mode may be employed in which, within the range from the first steered angle θt_A or more to the second steered angle θt_B or less, the first gain Ga to be multiplied by the torque value Tref_a (first torque value) gradually increases as the actual steered angle θt_act decreases, and accordingly, the second gain Gb to be multiplied by the torque value Tref_d (second torque value) gradually decreases as the actual steered angle θt_act decreases.

(Fourth Embodiment)

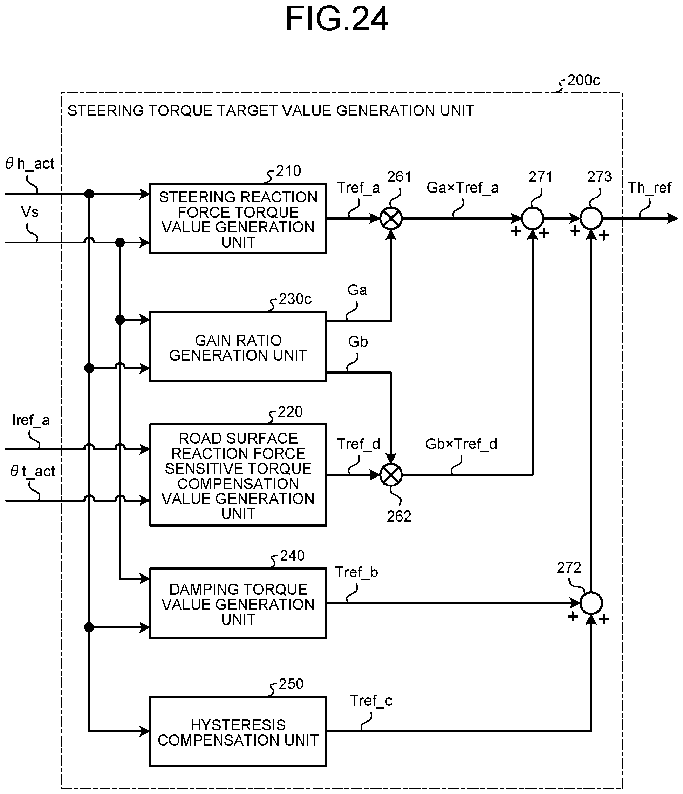

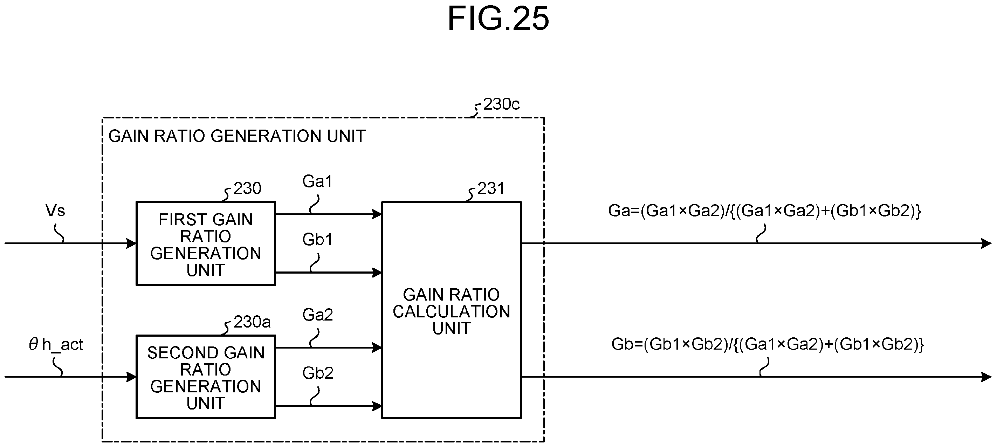

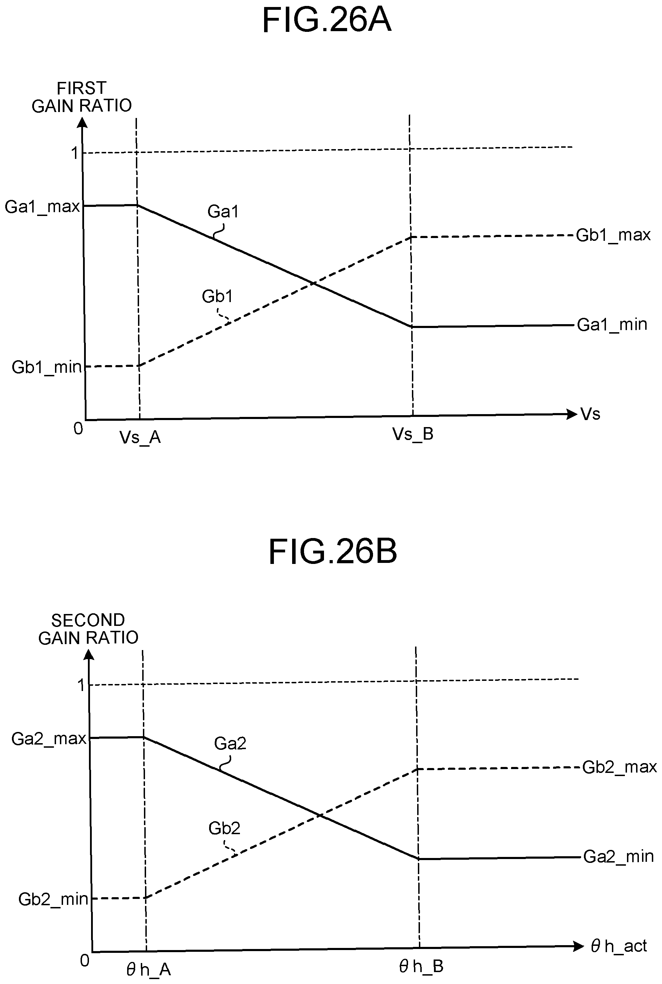

Hereinafter, a configuration and an operation according to a fourth embodiment capable of imparting a steering feeling according to the situation of the road surface and the state of the vehicle will be described with reference to FIGS. 24, 25, 26A, and 26B. FIG. 24 is a block diagram illustrating a configuration example of a steering torque target value generation unit according to the fourth embodiment. FIG. 25 is a block diagram illustrating a configuration example of a gain ratio generation unit according to the fourth embodiment. FIGS. 26A and 26B are diagrams conceptually illustrating an example of a gain ratio setting example in the gain ratio generation unit according to the fourth embodiment.

In the present embodiment, a first gain Ga and a second gain Gb are generated using the vehicle speed Vs and the actual steering angle θh_act as parameters. As illustrated in FIG. 24, the vehicle speed Vs and the actual steering angle θh_act are input to a gain ratio generation unit 230c of a steering torque target value generation unit 200c according to the fourth embodiment. As illustrated in FIG. 25, the gain ratio generation unit 230c includes a first gain ratio generation unit 230, a second gain ratio generation unit 230a, and a gain ratio calculation unit 231.

The first gain ratio generation unit 230 of the gain ratio generation unit 230c is substantially the same component as the gain ratio generation unit 230 according to the first embodiment. The first gain ratio generation unit 230 generates a first gain Ga1 that increases or decreases according to the vehicle speed Vs and a second gain Gb1 that causes the sum of the first gain Ga1 and the second gain Gb1 to be one.

The first gain ratio generation unit 230 monotonically decreases the first gain Ga1 within the range from the first vehicle speed Vs_A or more to the second vehicle speed Vs_B or less. Accordingly, the second gain Gb1 monotonically increases within the range from the first vehicle speed Vs_A or more to the second vehicle speed Vs_B or less. The first vehicle speed Vs_A is, for example, 5 [km/h]. The second vehicle speed Vs_B is, for example, 30 [km/h]. The present disclosure is not limited by the values of the first vehicle speed Vs_A and the second vehicle speed Vs_B.

FIG. 26A illustrates an example in which the maximum value Ga1_max of the first gain Ga1 in a range equal to or less than the first vehicle speed Vs_A is larger than the maximum value Gb1_max of the second gain Gb1 in a range equal to or more than the second vehicle speed Vs_B. In this case, the minimum value Gb1_min of the second gain Gb1 in the range equal to or less than the first vehicle speed Vs_A is larger than the minimum value Ga1_min of the first gain Ga1 in the range equal to or more than the second vehicle speed Vs_B.

Note that a mode may be employed in which the maximum value Ga1_max of the first gain Ga1 in the range equal to or less than the first vehicle speed Vs_A is smaller than the maximum value Gb1_max of the second gain Gb1 in the range equal to or more than the second vehicle speed Vs_B, and the minimum value Gb1_min of the second gain Gb1 in the range equal to or less than the first vehicle speed Vs_A is smaller than the minimum value Ga1_min of the first gain Ga1 in the range equal to or more than the second vehicle speed Vs_B.

Further, a mode may be employed in which the maximum value Ga1_max of the first gain Ga1 in the range equal to or less than the first vehicle speed Vs_A is equal to the maximum value Gb1_max of the second gain Gb1 in the range equal to or more than the second vehicle speed Vs_B, and the minimum value Gb1_min of the second gain Gb1 in the range equal to or less than the first vehicle speed Vs_A is equal to the minimum value Ga1_min of the first gain Ga1 in the range equal to or more than the second vehicle speed Vs_B.

Each value and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set according to the motion performance, vehicle specifications, and the like of the vehicle on which the control device 50 according to the present disclosure is mounted.

The second gain ratio generation unit 230a of the gain ratio generation unit 230c is substantially the same component as the gain ratio generation unit 230a according to the second embodiment. The second gain ratio generation unit 230a generates a first gain Ga2 that increases or decreases according to the actual steered angle θt_act and a second gain Gb2 that causes the sum of the first gain Ga2 and the second gain Gb2 to be one.

The second gain ratio generation unit 230a monotonically decreases the first gain Ga2 within the range from the first steering angle θh_A or more to the second steering angle θh_B or less. Accordingly, the second gain Gb2 monotonically increases within the range from the first steering angle θh_A or more to the second steering angle θh_B or less. The first steering angle θh_A is, for example, three [deg]. The second steering angle θh_B is, for example, 20 [deg]. The present disclosure is not limited by the respective values of the first steering angle θh_A and the second steering angle θh_B.

FIG. 26B illustrates an example in which the maximum value Ga2_max of the first gain Ga2 in a range equal to or less than the first steering angle θh_A is larger than the maximum value Gb2_max of the second gain Gb2 in a range equal to or more than the second steering angle θh_B. In this case, the minimum value Gb2_min of the second gain Gb2 in the range equal to or less than the first steering angle θh_A is larger than the minimum value Ga2_min of the first gain Ga2 in the range equal to or more than the second steering angle θh_B.

Note that a mode may be employed in which the maximum value Ga2_max of the first gain Ga2 in the range equal to or less than the first steering angle θh_A is smaller than the maximum value Gb2_max of the second gain Gb2 in the range equal to or more than the second steering angle θh_B, and the minimum value Gb2_min of the second gain Gb2 in the range equal to or less than the first steering angle θh_A is smaller than the minimum value Ga2_min of the first gain Ga2 in the range equal to or more than the second steering angle θh_B.

Further, a mode may be employed in which the maximum value Ga2_max of the first gain Ga2 in the range equal to or less than the first steering angle θh_A is equal to the maximum value Gb2_max of the second gain Gb2 in the range equal to or more than the second steering angle θh_B, and the minimum value Gb2_min of the second gain Gb2 in the range equal to or less than the first steering angle θh_A is equal to the minimum value Ga2_min of the first gain Ga2 in the range equal to or more than the second steering angle θh_B.

To the gain ratio calculation unit 231, the first gain Ga1 and the second gain Gb1 output from the first gain ratio generation unit 230, and the first gain Ga2 and the second gain Gb2 output from the second gain ratio generation unit 230a are input. The gain ratio calculation unit 231 calculates the first gain Ga by using the following Expression (14) and calculates the second gain Gb by using the following Expression (15).

$$Ga = (Ga1 \times Ga2)/\{(Ga1 \times Ga2) + (Gb1 \times Gb2)\} \qquad (14)$$

$$Gb = (Gb1 \times Gb2)/\{(Ga1 \times Ga2) + (Gb1 \times Gb2)\} \qquad (15)$$

The first gain Ga is multiplied by the torque value Tref_a (first torque value) by the multiplication unit 261. The second gain Gb is multiplied by the torque value Tref_d (second torque value) by the multiplication unit 262.

The steering torque target value generation unit 200c adds (addition units 271, 272, and 273) a torque value Ga×Tref_a obtained by multiplying the torque value Tref_a (first torque value) output from the steering reaction force torque value generation unit 210 by the first gain Ga (multiplication unit 261), Gb×Tref_d obtained by multiplying the torque value Tref_d (second torque value) output from the road surface reaction force sensitive torque compensation value generation unit 220 by the second gain Gb (multiplication unit 262), a torque value Tref_b output from the damping torque value generation unit 240, and a torque compensation value Tref_c output from the hysteresis compensation unit 250, and outputs a result as the steering torque target value Th_ref.

In the fourth embodiment, a steering reaction force corresponding to the road surface reaction force torque estimation value Tsat_est can be given to the steering wheel 1 at a ratio corresponding to both the vehicle speed Vs and the actual steering angle θh_act. Specifically, the steering torque target value generation unit 200c generates the steering torque target value Th_ref by multiplying the torque value Tref_a (first torque value) output from the steering reaction force torque value generation unit 210 by a relatively large first gain Ga in a region where the vehicle speed Vs or the actual steering angle θh_act is relatively small, and generates the steering torque target value Th_ref by multiplying the torque value Tref_d (second torque value) output from the road surface reaction force sensitive torque compensation value generation unit 220 by a relatively large second gain Gb in a region where the vehicle speed Vs or the actual steering angle θh_act is relatively large. Thus, it is possible to obtain a steering feeling reflecting the situation of the road surface, the vehicle speed Vs, and the actual steering angle θh_act.

Note that the gain ratio setting example in the first gain ratio generation unit 230 according to the fourth embodiment is an example, and is not limited to the mode illustrated in FIG. 26A described above. For example, a mode may be employed in which the first gain Ga1 gradually decreases as the vehicle speed Vs increases within the range from the first vehicle speed Vs_A or more to the second vehicle speed Vs_B or less, and accordingly, the second gain Gb1 gradually increases as the vehicle speed Vs increases. Further, for example, a mode may be employed in which, within the range from the first vehicle speed Vs_A or more to the second vehicle speed Vs_B or less, the first gain Ga1 gradually increases as the vehicle speed Vs decreases, and accordingly, the second gain Gb1 gradually decreases as the vehicle speed Vs decreases.

The gain ratio setting example in the second gain ratio generation unit 230a according to the fourth embodiment is an example, and is not limited to the mode illustrated in FIG. 26B described above. For example, a mode may be employed in which, within the range from the first steering angle θh_A or more to the second steering angle θh_B or less, the first gain Ga2 gradually decreases as the actual steering angle θh_act increases, and accordingly, the second gain Gb2 gradually increases as the actual steering angle θh_act increases. Further, for example, a mode may be employed in which, within the range from the first steering angle θh_A or more to the second steering angle θh_B or less, the first gain Ga2 gradually increases as the actual steering angle θh_act decreases, and accordingly, the second gain Gb2 gradually decreases as the actual steering angle θh_act decreases.

(Fifth Embodiment)

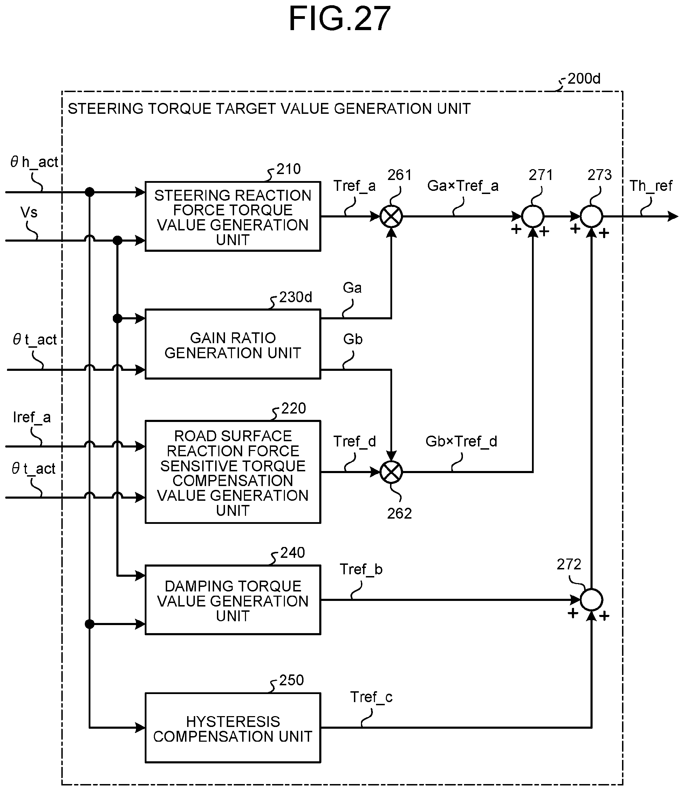

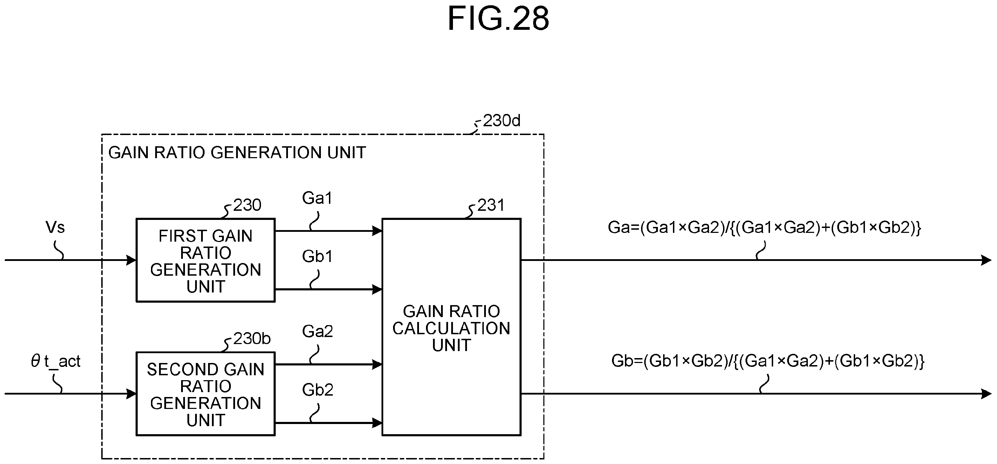

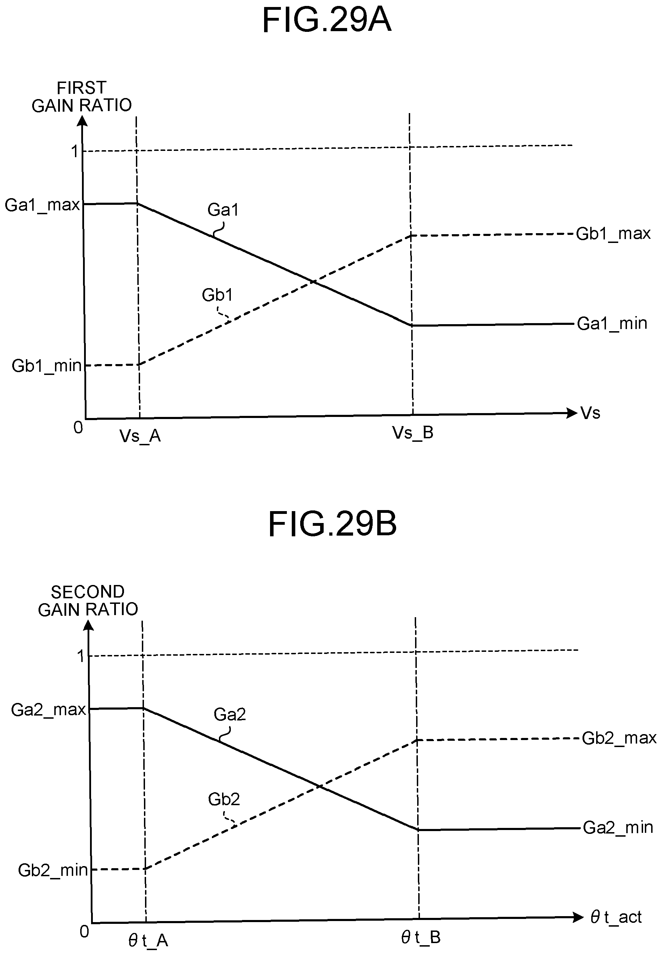

Hereinafter, a configuration and an operation according to a fifth embodiment capable of imparting a steering feeling according to the situation of the road surface and the state of the vehicle will be described with reference to FIGS. 27, 28, 29A, and 29B. FIG. 27 is a block diagram illustrating a configuration example of a steering torque target value generation unit according to the fifth embodiment. FIG. 28 is a block diagram illustrating a configuration example of a gain ratio generation unit according to the fifth embodiment. FIGS. 29A and 29B are diagrams conceptually illustrating an example of a gain ratio setting example in the gain ratio generation unit according to the fifth embodiment.

In the present embodiment, a first gain Ga and a second gain Gb are generated using the vehicle speed Vs and the actual steered angle θt_act as parameters. As illustrated in FIG. 27, the vehicle speed Vs and the actual steered angle θt_act are input to a gain ratio generation unit 230d of a steering torque target value generation unit 200d according to the fifth embodiment. As illustrated in FIG. 25, the gain ratio generation unit 230d includes a first gain ratio generation unit 230, a second gain ratio generation unit 230b, and a gain ratio calculation unit 231.

The first gain ratio generation unit 230 of the gain ratio generation unit 230d is substantially the same component as the gain ratio generation unit 230 according to the first embodiment. The first gain ratio generation unit 230 generates a first gain Ga1 that increases or decreases according to the vehicle speed Vs and a second gain Gb1 that causes the sum of the first gain Ga1 and the second gain Gb1 to be one.

The first gain ratio generation unit 230 monotonically decreases the first gain Ga1 within the range from the first vehicle speed Vs_A or more to the second vehicle speed Vs_B or less. Accordingly, the second gain Gb1 monotonically increases within the range from the first vehicle speed Vs_A or more to the second vehicle speed Vs_B or less. The first vehicle speed Vs_A is, for example, 5 [km/h]. The second vehicle speed Vs_B is, for example, 30 [km/h]. The present disclosure is not limited by the values of the first vehicle speed Vs_A and the second vehicle speed Vs_B.

FIG. 29A illustrates an example in which the maximum value Ga1_max of the first gain Ga1 in a range equal to or less than the first vehicle speed Vs_A is larger than the maximum value Gb1_max of the second gain Gb1 in a range equal to or more than the second vehicle speed Vs_B. In this case, the minimum value Gb1_min of the second gain Gb1 in the range equal to or less than the first vehicle speed Vs_A is larger than the minimum value Ga1_min of the first gain Ga1 in the range equal to or more than the second vehicle speed Vs_B.

Note that a mode may be employed in which the maximum value Ga1_max of the first gain Ga1 in the range equal to or less than the first vehicle speed Vs_A is smaller than the maximum value Gb1_max of the second gain Gb1 in the range equal to or more than the second vehicle speed Vs_B, and the minimum value Gb1_min of the second gain Gb1 in the range equal to or less than the first vehicle speed Vs_A is smaller than the minimum value Ga1_min of the first gain Ga1 in the range equal to or more than the second vehicle speed Vs_B.

Further, a mode may be employed in which the maximum value Ga1_max of the first gain Ga1 in the range equal to or less than the first vehicle speed Vs_A is equal to the maximum value Gb1_max of the second gain Gb1 in the range equal to or more than the second vehicle speed Vs_B, and the minimum value Gb1_min of the second gain Gb1 in the range equal to or less than the first vehicle speed Vs_A is equal to the minimum value Ga1_min of the first gain Ga1 in the range equal to or more than the second vehicle speed Vs_B.

Each value and magnitude relationship of the maximum value Ga_max of the first gain Ga, the minimum value Ga_min of the first gain Ga, the maximum value Gb_max of the second gain Gb, and the minimum value Gb_min of the second gain Gb only need to be appropriately set according to the motion performance, vehicle specifications, and the like of the vehicle on which the control device 50 according to the present disclosure is mounted.

The second gain ratio generation unit 230b of the gain ratio generation unit 230c is substantially the same component as the gain ratio generation unit 230b according to the third embodiment. The second gain ratio generation unit 230b generates a first gain Ga2 that increases or decreases according to the actual steered angle θt_act and a second gain Gb2 that causes the sum of the first gain Ga2 and the second gain Gb2 to be one.

The second gain ratio generation unit 230b monotonically decreases the first gain Ga2 within a range from the first steered angle θt_A or more to the second steered angle θt_B or less. Accordingly, the second gain Gb2 monotonically increases within a range from the first steered angle θt_A or more to the second steered angle θt_B or less. The first steered angle θt_A is, for example, three [deg]. The second steered angle θt_B is, for example, 20 [deg]. The present disclosure is not limited by the respective values of the first steered angle θt_A and the second steered angle θt_B.

FIG. 29B illustrates an example in which the maximum value Ga2_max of the first gain Ga2 in a range equal to or less than the first steered angle θt_A is larger than the maximum value Gb2_max of the second gain Gb2 in a range equal to or more than the second steered angle θt_B. In this case, the minimum value Gb2_min of the second gain Gb2 in the range equal to or less than the first steered angle θt_A is larger than the minimum value Ga2_min of the first gain Ga2 in the range equal to or more than the second steered angle θt_B.

Note that a mode may be employed in which the maximum value Ga2_max of the first gain Ga2 in the range equal to or less than the first steered angle θt_A is smaller than the maximum value Gb2_max of the second gain Gb2 in the range equal to or more than the second steered angle θt_B, and the minimum value Gb2_min of the second gain Gb2 in the range equal to or less than the first steered angle θt_A is smaller than the minimum value Ga2_min of the first gain Ga2 in the range equal to or more than the second steered angle θt_B.

Further, a mode may be employed in which the maximum value Ga2_max of the first gain Ga2 in the range equal to or less than the first steered angle θt_A is equal to the maximum value Gb2_max of the second gain Gb2 in the range equal to or more than the second steered angle θt_B, and the minimum value Gb2_min of the second gain Gb2 in the range equal to or less than the first steered angle θt_A is equal to the minimum value Ga2_min of the first gain Ga2 in the range equal to or more than the second steered angle θt_B.

The gain ratio calculation unit 231 calculates the first gain Ga and the second gain Gb using Expressions (14) and (15) described in the fourth embodiment.

The first gain Ga is multiplied by the torque value Tref_a (first torque value) by the multiplication unit 261. The second gain Gb is multiplied by the torque value Tref_d (second torque value) by the multiplication unit 262.

The steering torque target value generation unit 200d adds (addition units 271, 272, and 273) a torque value Ga×Tref_a obtained by multiplying the torque value Tref_a (first torque value) output from the steering reaction force torque value generation unit 210 by the first gain Ga (multiplication unit 261), Gb×Tref_d obtained by multiplying the torque value Tref_d (second torque value) output from the road surface reaction force sensitive torque compensation value generation unit 220 by the second gain Gb (multiplication unit 262), a torque value Tref_b output from the damping torque value generation unit 240, and a torque compensation value Tref_c output from the hysteresis compensation unit 250, and outputs a result as the steering torque target value Th_ref.

In the fifth embodiment, a steering reaction force corresponding to the road surface reaction force torque estimation value Tsat_est can be given to the steering wheel 1 at a ratio corresponding to both the vehicle speed Vs and the actual steered angle θt_act. Specifically, the steering torque target value generation unit 200d generates the steering torque target value Th_ref by multiplying the torque value Tref_a (first torque value) output from the steering reaction force torque value generation unit 210 by a relatively large first gain Ga in a region where the vehicle speed Vs or the actual steered angle θt_act is relatively small, and generates the steering torque target value Th_ref by multiplying the torque value Tref_d (second torque value) output from the road surface reaction force sensitive torque compensation value generation unit 220 by a relatively large second gain Gb in a region where the vehicle speed Vs or the actual steered angle θt_act is relatively large. Thus, it is possible to obtain a steering feeling reflecting the situation of the road surface, the vehicle speed Vs, and the actual steered angle θt_act.

Note that the gain ratio setting example in the first gain ratio generation unit 230 according to the fifth embodiment is an example, and is not limited to the mode illustrated in FIG. 29A described above. For example, a mode may be employed in which the first gain Ga1 gradually decreases as the vehicle speed Vs increases within the range from the first vehicle speed Vs_A or more to the second vehicle speed Vs_B or less, and accordingly, the second gain Gb1 gradually increases as the vehicle speed Vs increases. Further, for example, a mode may be employed in which, within the range from the first vehicle speed Vs_A or more to the second vehicle speed Vs_B or less, the first gain Ga1 gradually increases as the vehicle speed Vs decreases, and accordingly, the second gain Gb1 gradually decreases as the vehicle speed Vs decreases.

The gain ratio setting example in the second gain ratio generation unit 230b according to the fifth embodiment is an example, and is not limited to the mode illustrated in FIG. 29B described above. For example, a mode may be employed in which, within the range from the first steered angle θt_A or more to the second steered angle θt_B or less, the first gain Ga2 gradually decreases as the actual steered angle θt_act increases, and accordingly, the second gain Gb2 gradually increases as the actual steered angle θt_act increases. Further, for example, a mode may be employed in which, within the range from the first steered angle θt_A or more to the second steered angle θt_B or less, the first gain Ga2 gradually increases as the actual steered angle θt_act decreases, and accordingly, the second gain Gb2 gradually decreases as the actual steered angle θt_act decreases.

(Sixth Embodiment)

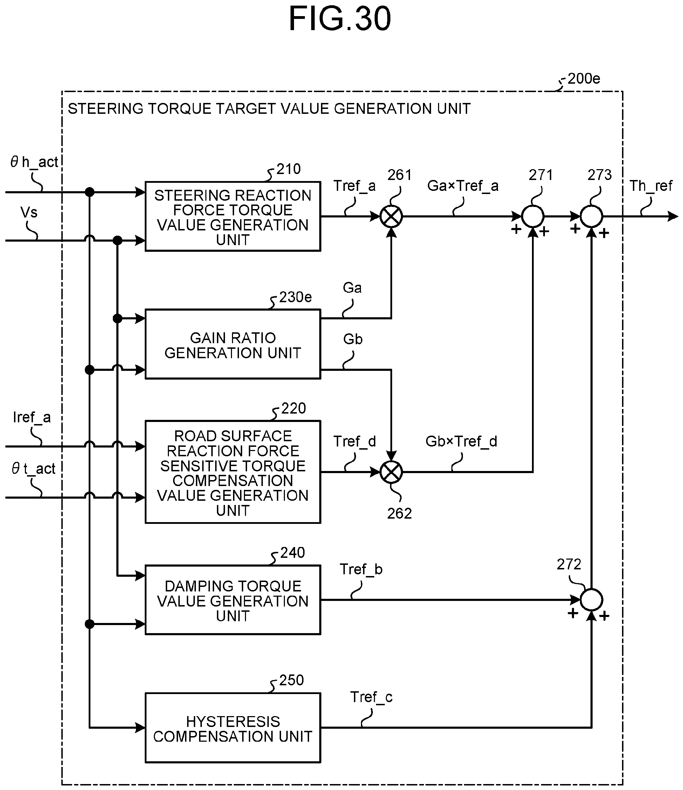

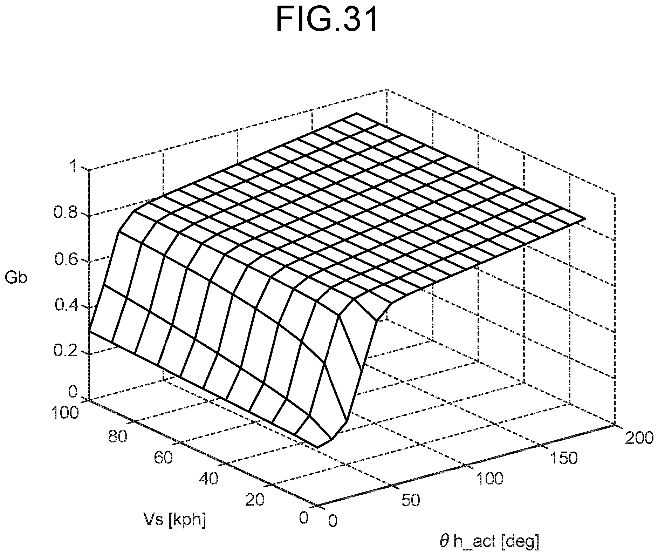

In the present embodiment, a setting method of the first gain Ga and the second gain Gb different from that of the fourth embodiment will be described. FIG. 30 is a block diagram illustrating a configuration example of a steering torque target value generation unit according to a sixth embodiment. FIG. 31 is a 3D map illustrating an example of a gain ratio generation method according to the sixth embodiment.

A gain ratio generation unit 230e of a steering torque target value generation unit 200e according to the sixth embodiment has a gain ratio setting map illustrated in FIG. 31. The gain ratio generation unit 230e generates the second gain Gb with the vehicle speed Vs and the actual steering angle θh_act as parameters using a gain ratio map illustrated in FIG. 31. Furthermore, the gain ratio generation unit 230e calculates the first gain Ga using the following Expression (16).

$$Ga = 1 - Gb \qquad\qquad (16)$$

Note that, in the example illustrated in FIG. 31, the gain ratio generation unit 230e generates the second gain Gb using the gain ratio map illustrated in FIG. 31 and calculates the first gain Ga using the above Expression (16), but a mode may be employed in which the gain ratio generation unit 230e has a gain ratio map for generating the first gain Ga with the vehicle speed Vs and the actual steering angle θh_act as parameters, and calculates the second gain Gb using the following Expression (17) obtained by modifying the above Expression (16).

$$Gb = 1 - Ga \qquad\qquad (17)$$

Further, in the present embodiment, the example in which the first gain Ga and the second gain Gb are generated using the vehicle speed Vs and the actual steering angle θh_act as parameters has been described as in the fourth embodiment, but a mode may be employed in which a gain ratio map for generating the second gain Gb or the first gain Ga with the vehicle speed Vs and the actual steered angle θt_act as parameters is included, and the first gain Ga and the second gain Gb are generated using the vehicle speed Vs and the actual steered angle θt_act as parameters as in the fifth embodiment.

(Seventh embodiment)

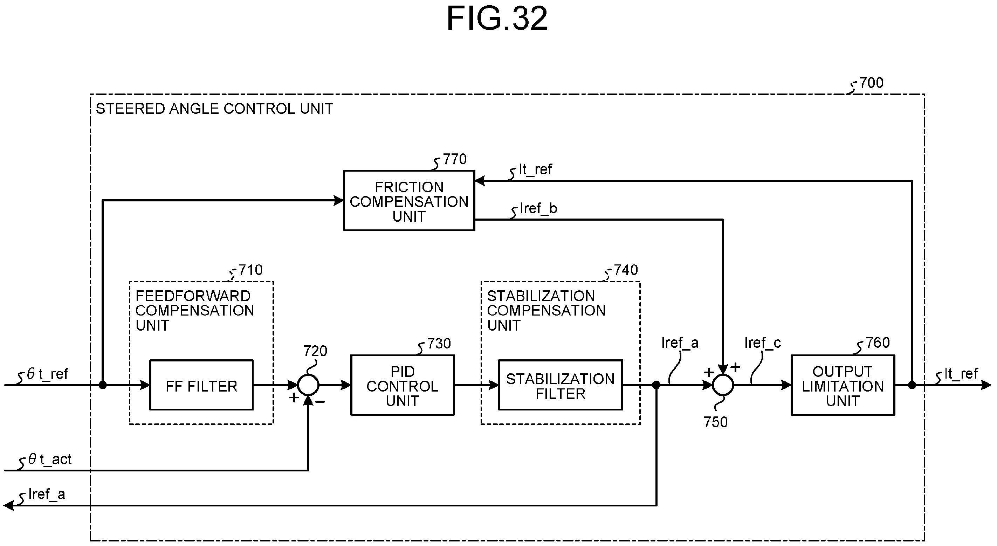

In the present embodiment, the steered angle control unit 700 will be described. FIG. 32 is a block diagram illustrating a configuration example of a steered angle control unit. As illustrated in FIG. 32, the steered angle control unit 700 includes a feedforward compensation unit 710, a PID control unit 730, a stabilization compensation unit 740, an output limitation unit 760, a friction compensation unit 770, and addition units 720 and 750.

The feedforward compensation unit 710 includes a filter (FF filter) for improving the followability of the actual steered angle θt_act with respect to the steered angle target value θt_ref. The feedforward compensation unit 710 performs filter processing on the steered angle target value θt_ref. Specifically, for example, an LPF having a transfer function with a first-order delay or a second-order delay is used, and the LPF is designed so that a time delay caused by filter processing by the LPF is equivalent to a following delay of the actual steered angle θt_act with respect to the steered angle target value θt_ref.

The PID control unit 730 performs PID control so that a deviation θt_err between the steered angle target value θt_ref and the actual steered angle θt_act, which are calculation results of the addition unit 720, approaches zero.

The stabilization compensation unit 740 includes a filter (stabilization filter) having a transmission characteristic necessary for stabilizing control. The stabilization compensation unit 740 performs filter processing on the output value of the PID control unit 730.

The output limitation unit 760 performs output limitation processing on the current command value Iref_c, which is a calculation result of the addition unit 750, and outputs the second steering motor current command value It_ref. In the output limitation unit 760, an upper limit value and a lower limit value for the current command value Iref_c are set in advance. The output limitation unit 760 limits the upper and lower limit values of the current command value Iref_c and outputs the steering motor current command value It_ref.

Note that the feedforward compensation unit 710 and the stabilization compensation unit 740 described above are not necessarily required components, and for example, a mode may be employed in which any one or both of the feedforward compensation unit 710 and the stabilization compensation unit 740 are not included.

On the basis of the steered angle target value $\theta t\_ref$, the friction compensation unit 770 calculates a second current compensation value $Iref\_b$ for compensating the following delay of the actual steered angle $\theta t\_act$ with respect to the steered angle target value $\theta t\_ref$ caused by friction in the turning mechanism. Hereinafter, a specific configuration and operation of the friction compensation unit 770 will be described in detail.

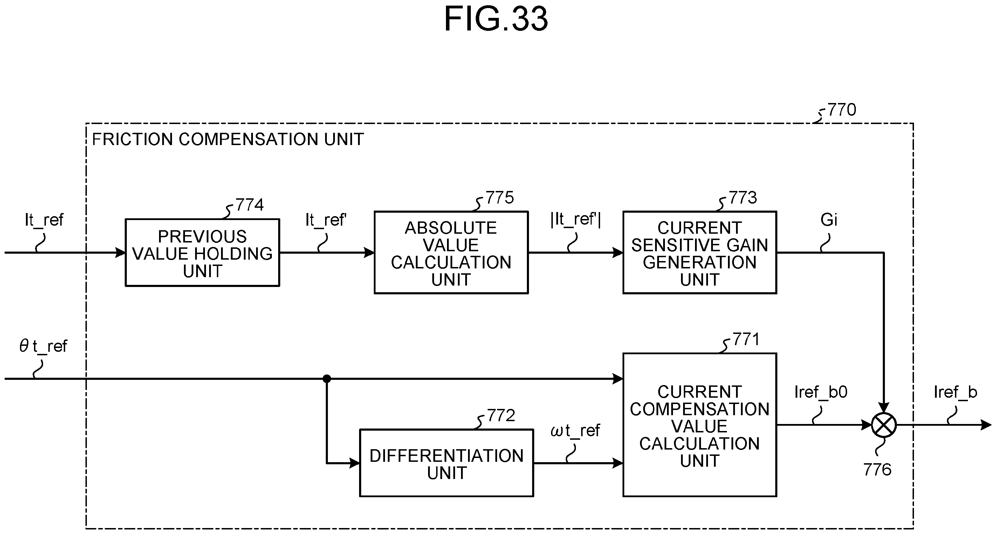

FIG. 33 is a block diagram illustrating a configuration example of the friction compensation unit. As illustrated in FIG. 33, the friction compensation unit 770 includes a current compensation value calculation unit 771 and a current sensitive gain generation unit 773 as main components.

To the current compensation value calculation unit 771, the steered angle target value $\theta t\_ref$ and a steering speed target value $\omega t\_ref$ calculated by differentiating the steered angle target value $\theta t\_ref$ by a differentiation unit 772 are input. The current compensation value calculation unit 771 calculates the first current compensation value $Iref\_b0$ on the basis of the steered angle target value $\theta t\_ref$ and the steering speed target value $\omega t\_ref$.

Hereinafter, a calculation method of the first current compensation value $Iref\_b0$ in the current compensation value calculation unit 771 will be described.

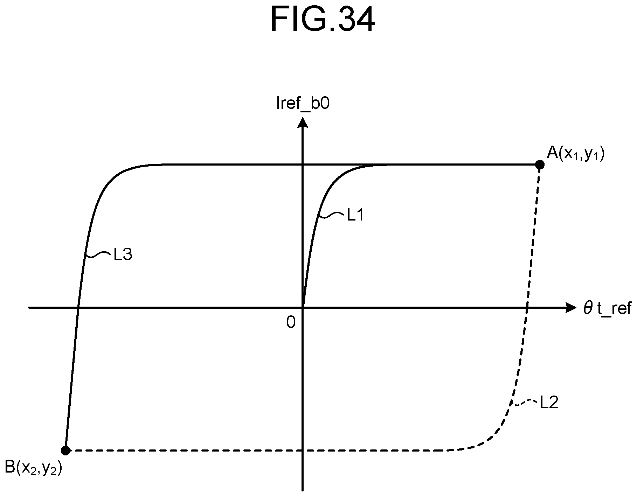

FIG. 34 is a diagram illustrating a characteristic example of the first current compensation value in the current compensation value calculation unit. In FIG. 34, the horizontal axis represents the steered angle target value $\theta t\_ref$, and the vertical axis represents the first current compensation value $Iref\_b0$. Further, in FIG. 34, a solid line indicates the first current compensation value $Iref\_b0$ at the time of rightward steering, and a broken line indicates the first current compensation value $Iref\_b0$ at the time of leftward steering. As illustrated in FIG. 34, the first current compensation value $Iref\_b0$ calculated by the current compensation value calculation unit 771 has hysteresis characteristics that differ between when steering to left and when steering to left. L1 illustrated in FIG. 34 represents a locus when rightward turning is performed from the center position (origin (0,0)) of the steered wheels 5L and 5R, L2 represents a locus when switching from rightward turning to leftward turning occurs in coordinates $A(x_1,y_1)$, and L3 represents a locus when switching from rightward turning to leftward turning occurs in coordinates $B(x_2,y_2)$.

The current compensation value calculation unit 771 calculates the first current compensation value $Iref\_b0$ using the following Expressions (18) and (19) on the basis of the steered angle target value $\theta t\_ref$ and the steering speed target value $\omega t\_ref$. Specifically, when the sign $\omega t\_ref(sgn)$ of the steering speed target value $\omega t\_ref$ is a positive value ("+"), the first current compensation value $Iref\_b0$ is calculated using the following Expression (18), and when the sign $\omega t\_ref(sgn)$ of the steering speed target value $\omega t\_ref$ is a negative value ("-"), the first current compensation value $Iref\_b0$ is calculated using the following Expression (19). Note that, in the following Expressions (18) and (19), x is the steering speed target value $\omega t\_ref$, $y_R$ is the first current compensation value $Iref\_b0$ at the time of rightward steering, and $y_L$ is the first current compensation value $Iref\_b0$ at the time of leftward steering. In addition, the coefficient a is a value larger than one, and the coefficient c is a value larger than zero. The coefficient Ahys indicates an output width of the hysteresis characteristic (a width of the first current compensation value $Iref\_b0$), and the coefficient c is a coefficient representing roundness of the hysteresis characteristic.

$$y_R = Ahys\{1 - a^{-c(x-b)}\} \qquad\qquad (18)$$

$$y_L = -Ahys\{1 - a^{c(x-b')}\} \qquad\qquad (19)$$

That is, the current compensation value calculation unit 771 calculates the first current compensation value $Iref\_b0$ ($y_R$) using the above Expression (18) at the time of rightward steering ($\omega t\_ref(sgn)$ = "+"), and calculates the first current compensation value $Iref\_b0$ ($y_L$) using the above Expression (19) at the time of leftward steering ($\omega t\_ref(sgn)$ = "-").

When the switching from the rightward steering to the leftward steering occurs ($\omega t\_ref(sgn)$ = "+" → "-"), or when the switching from the leftward steering to the rightward steering occurs ($\omega t\_ref(sgn)$ = "-" → "+"), the current compensation value calculation unit 771 takes over the previous values of the steered angle target value $\theta t\_ref$ and the first current compensation value $Iref\_b0$, and substitutes a coefficient b or b' expressed in the following Expression (20) or (21) into the above Expression (18) or (19) applied after the steering switching. Thereby, continuity before and after steering switching is maintained. Specifically, when switching from the rightward steering to the leftward steering occurs ($\omega t\_ref(sgn)$ = "+" → "-"), the current compensation value calculation unit 771 applies the previous values (coordinates $A(x_1,y_1)$ illustrated in FIG. 34) of the steered angle target value $\theta t\_ref$ and the first current compensation value $Iref\_b0$ to the above Expression (19), and substitutes the coefficient b' expressed in the following Expression (21) to calculate the first current compensation value $Iref\_b0$. In addition, when switching from leftward steering to rightward steering occurs ($\omega t\_ref(sgn)$ = "-" → "+"), the current compensation value calculation unit 771 applies the previous values (coordinates $B(x_2,y_2)$ illustrated in FIG. 34) of the steered angle target value $\theta t\_ref$ and the first current compensation value $Iref\_b0$ to the above Expression (18), and substitutes the coefficient b expressed in the following Expression (20) to calculate the first current compensation value Iref_b0.

$$b = x_1 + (1/c)\log_a\{1 - (y_1/Ahys)\} \qquad (20)$$

$$b' = x_1 - (1/c)\log_a\{1 - (y_1/Ahys)\} \qquad (21)$$

Expressions (20) and (21) can be derived by substituting $x_1$ for x and substituting $y_1$ for $y_R$ and $y_L$ in the above Expressions (18) and (19).

For example, in a case where the Napier's constant e is used as the coefficient a, the above Expressions (18), (19), (20), and (21) can be expressed by the following Expressions (22), (23), (24), and (25), respectively.

$$y_R = Ahys[1 - \exp\{-c(x-b)\}] \qquad (22)$$

$$y_L = -Ahys[\{1 - \exp\{c(x-b')\}] \qquad (23)$$

$$b = x_1 + (1/c)\log_e\{1 - (y_1/Ahys)\} \qquad (24)$$

$$b' = x_1 - (1/c)\log_e\{1 - (y_1/Ahys)\} \qquad (25)$$

Returning to FIG. 33, a previous value holding unit 774 holds a previous output value It_ref' of the steered angle control unit 700. Specifically, the previous output value It_ref' is the second steering motor current command value It_ref in the previous process. The previous value holding unit 774 includes, for example, a RAM of an ECU constituting the control device 50.

In the present disclosure, an absolute value calculation unit 775 performs absolute value processing on the previous output value It_ref' of the steered angle control unit 700 output from the previous value holding unit 774.

To the current sensitive gain generation unit 773, the previous output value |It_ref'| of the steered angle control unit 700 subjected to the absolute value processing in the absolute value calculation unit 775 is input. The current sensitive gain generation unit 773 generates a gain Gi corresponding to the previous output value |It_ref'| of the steered angle control unit 700.

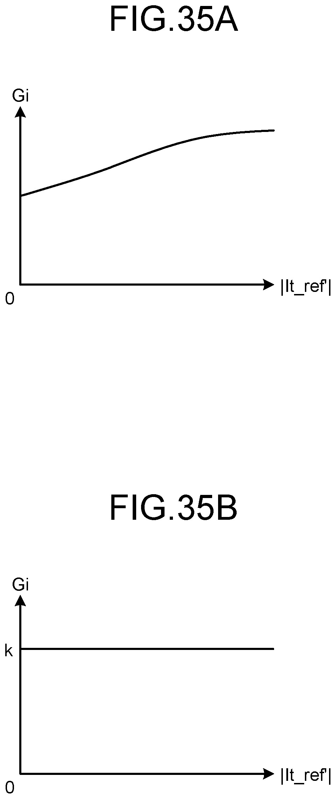

The current sensitive gain generation unit 773 has a current sensitive gain map in which the gain Gi corresponding to the previous output value |It_ref'| of the steered angle control unit 700 is set. The current sensitive gain map is stored in, for example, the ROM of the ECU constituting the control device 50. FIG. 35A is a diagram illustrating a first example of the current sensitive gain map. FIG. 35B is a diagram illustrating a second example of the current sensitive gain map.

The first example of the current sensitive gain map illustrated in FIG. 35A has a current value sensitive type characteristic in which the gain Gi increases or decreases according to the previous output value |It_ref'| of the steered angle control unit 700. More specifically, as illustrated in FIG. 35A, the gain Gi monotonically increases as the previous output value |It_ref'| of the steered angle control unit 700 increases.

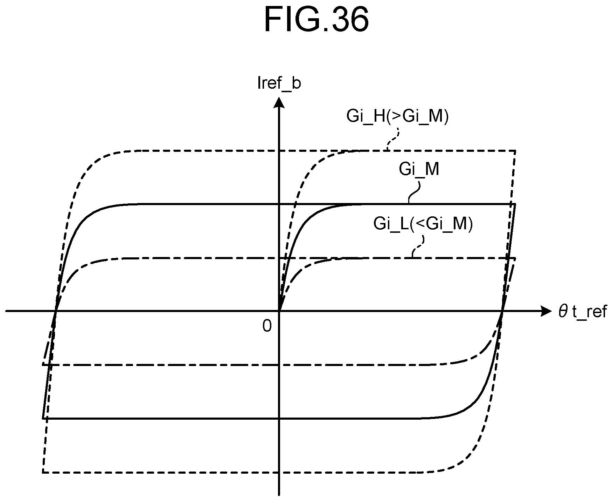

FIG. 36 is a diagram illustrating an example of output characteristics of the friction compensation unit. In FIG. 36, the horizontal axis represents the steered angle target value θt_ref, and the vertical axis represents the second current compensation value Iref_b.

The frictional force generated in the turning mechanism includes friction due to gear torque interposed between the steering motor 41 and the deceleration mechanism 42. Note that the gear torque refers to a torque caused by a frictional force generated in a mechanical element of the speed reducer. For example, in the case of a worm reduction gear, a frictional torque caused by a frictional force generated in the meshing portion between the worm gear and the worm wheel may be defined as a gear torque. The frictional force due to the gear torque monotonously increases with respect to the motor current.

In the present disclosure, the friction compensation unit 770 multiplies the first current compensation value Iref_b0 output from the current compensation value calculation unit 771 by the gain Gi generated by the current sensitive gain generation unit 773 (multiplication unit 776) to calculate the second current compensation value Iref_b. Thus, as illustrated in FIG. 36, a characteristic is obtained in which the output width of the hysteresis characteristic (the width of the second current compensation value Iref_b) increases or decreases according to the second steering motor current command value It_ref, and friction compensation control according to the frictional force caused by the gear torque can be implemented.

Specifically, in a case where the second steering motor current command value It_ref is relatively large, the gear torque becomes relatively large, and the frictional force caused by the gear torque acts strongly. Under such circumstances, by multiplying the first current compensation value Iref_b0 output from the current compensation value calculation unit 771 by the gain Gi_H relatively larger than the gain Gi_M, the output width of the hysteresis characteristic (the width of the second current compensation value Iref_b) can be increased as indicated by a broken line.

Further, in a case where the second steering motor current command value It_ref is relatively small, the gear torque becomes relatively small, and the frictional force caused by the gear torque becomes small. Under such circumstances, by multiplying the first current compensation value Iref_b0 output from the current compensation value calculation unit 771 by the gain Gi_L relatively smaller than the gain Gi_M, the output width of the hysteresis characteristic (the width of the second current compensation value Iref_b) can be reduced as indicated by an alternate long and short dash line.

Note that the mode of the current sensitive gain map is not limited to the mode of the first example illustrated in FIG. 35A. For example, as in the second example illustrated in FIG. 35B, a mode may be employed in which, regardless of the second steering motor current command value It_ref (previous output value |It_ref'| of the steered angle control unit 700), the first current compensation value Iref_b0 output from the current compensation value calculation unit 771 is multiplied by a constant gain Gi = k (for example, k = 1) to calculate the second current compensation value Iref_b.

The second current compensation value Iref_b output from the friction compensation unit 770 is added to the first steering motor current command value Iref_a output from the stabilization compensation unit 740 by the addition unit 750 illustrated in FIG. 32, and the second steering motor current command value It_ref for which output limitation is performed by the output limitation unit 760 is output for the current command value Iref_c after addition.

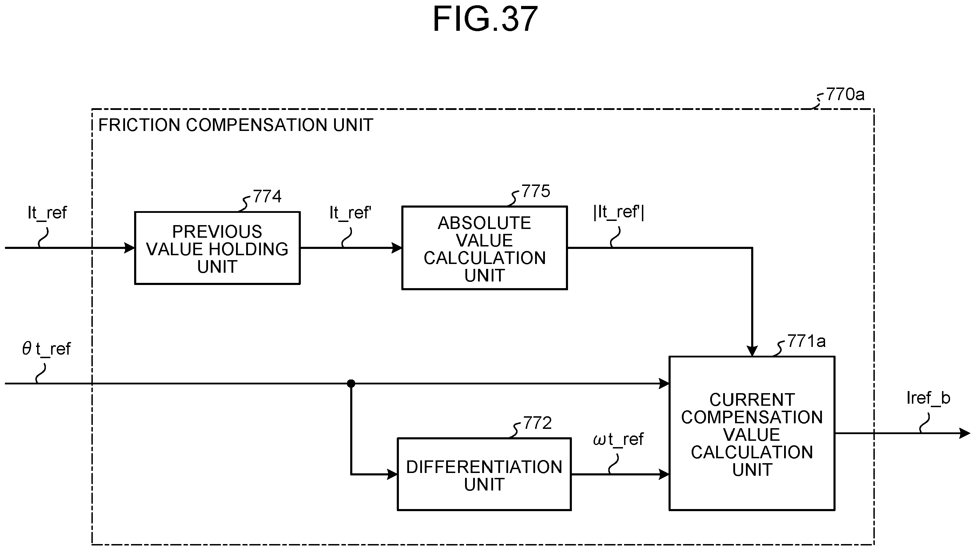

FIG. 37 is a block diagram illustrating a configuration example of a friction compensation unit according to a modification. In a configuration example of a friction compensation unit 770a illustrated in FIG. 33, the first current compensation value Iref_b0 output from the current compensation value calculation unit 771 is multiplied by the gain Gi generated by the current sensitive gain generation unit 773, but a mode is employed in which in the modification illustrated in FIG. 37, a current compensation value calculation unit 771a holds a table (data) in which the second steering motor current command value It_ref (the previous output value |It_ref'| of the steered angle control unit 700) and the coefficient Ahys in the above Expressions (6) to (13) are associated with each other, and obtains, as illustrated in FIG. 36, a characteristic in which the output width of the hysteresis characteristic (the width of the second current compensation value Iref_b) increases or decreases according to the second steering motor current command value It_ref. The data can be stored in, for example, the ROM of the ECU constituting the control device 50, similarly to the current sensitive gain map. Thus, similarly to the configuration illustrated in FIG. 33, friction compensation control according to the frictional force caused by the gear torque can be implemented.

Note that it is not limited to the mode in which the steered angle target value θt_ref is differentiated to obtain the steering speed target value ωt_ref, and for example, a mode may be employed in which switching of the turning direction is determined using the motor angular velocity of the steering motor 41. In addition, a filter may be provided in a preceding stage of the current compensation value calculation unit 771 and the current sensitive gain generation unit 773, or a filter may be provided in a subsequent stage of the current sensitive gain generation unit 773. Furthermore, a limiter that performs output limitation processing on the second current compensation value Iref_b may be provided at a subsequent stage of the friction compensation unit 770, similarly to the output limitation unit 760 described above.

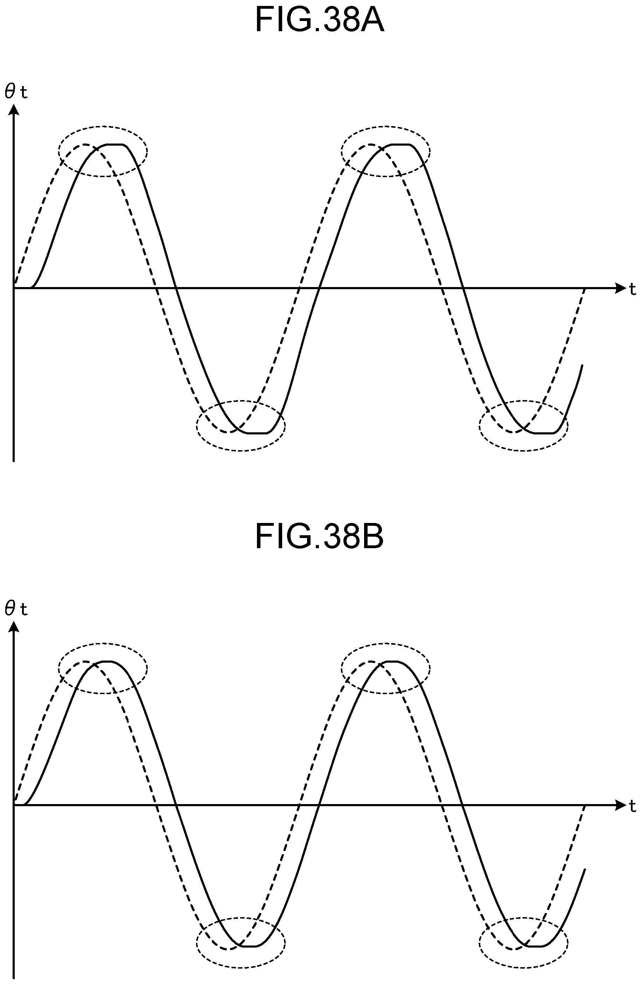

FIGS. 38A and 38B are first conceptual diagrams for describing a specific example of friction compensation control by the friction compensation unit. In FIGS. 38A and 38B, the horizontal axis represents time, and the vertical axis represents the steered angle. The broken line illustrated in FIGS. 38A and 38B indicates the steered angle target value θt_ref, and the solid line indicates the actual steered angle θt_act. FIG. 38A illustrates a time response in a case where friction compensation control by the friction compensation unit 770 is not performed. FIG. 38B illustrates a time response in a case where friction compensation control by the friction compensation unit 770 is performed.

In the example illustrated in FIGS. 38A and 38B, the time response in a case where turning left and right is performed at a relatively fast predetermined frequency from the center position of the steered wheels 5L and 5R is illustrated. In a case where the friction compensation control by the friction compensation unit 770 is not performed, distortion occurs in the actual steered angle θt_act at the time of switching the turning direction surrounded by a broken line as illustrated in FIG. 38A. In this case, in switching of the steering direction from turning increase to turning back of the steering wheel operation by the driver or switching from the turning back to the turning increase, there is a possibility that a deviation occurs between the operation (steering) of the steering wheel 1 and the turning of the steered wheels 5L and 5R, and the driver feels uncomfortable. On the other hand, in a case where the friction compensation control is performed by the friction compensation unit 770, as illustrated in FIG. 38B, the occurrence of distortion in the actual steered angle θt_act at the time of switching the turning direction surrounded by the broken line is suppressed.

More specifically, when the steered angle target value θt_ref is switched at the time of switching the turning direction, the steering speed target value ωt_ref becomes substantially zero, but since the first current compensation value Iref_b0 is determined according to the steered angle target value θt_ref, the friction compensation unit 770 can perform predetermined friction compensation control even when the steering speed target value ωt_ref is substantially zero.

Thus, it is possible to reduce the sense of discomfort given to the driver in switching of the steering direction from turning increase to turning back of the steering wheel operation by the driver or switching from the turning back to the turning increase.

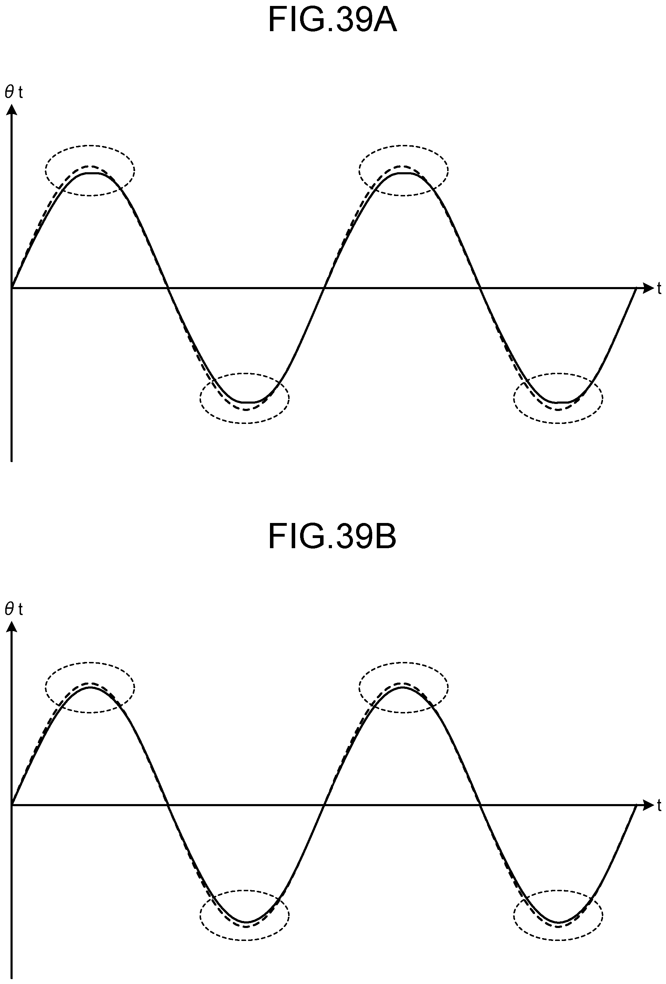

FIGS. 39A and 39B are second conceptual diagrams for describing a specific example of friction compensation control by the friction compensation unit. In FIGS. 39A and 39B, the horizontal axis represents time, and the vertical axis represents the steered angle. The broken line illustrated in FIGS. 39A and 39B indicates the steered angle target value $\theta t\_ref$, and the solid line indicates the actual steered angle $\theta t\_act$. FIG. 39A illustrates a time response in a case where friction compensation control according to the steering speed target value $\omega t\_ref$ is performed as a comparative example of the friction compensation control according to the embodiment. FIG. 39B illustrates a time response in a case where friction compensation control is performed by the friction compensation unit 770.

In the example illustrated in FIGS. 39A and 39B, the time response in a case where turning is slightly performed left and right is performed is illustrated as compared with FIGS. 38A and 38B. In a case where the friction compensation control according to the steering speed target value $\omega t\_ref$ according to the comparative example is performed, as illustrated in FIG. 39A, in a case where turning is slightly performed left and right, distortion occurs in the actual steered angle $\theta t\_act$ at the time of switching the turning direction surrounded by a broken line. On the other hand, in a case where the friction compensation control is performed by the friction compensation unit 770, as illustrated in FIG. 39B, even in a case where the turning is slightly performed left and right, it is possible to suppress the occurrence of distortion in the actual steered angle $\theta t\_act$ at the time of switching the turning direction surrounded by the broken line.

More specifically, in a case where the steering wheel is operated slowly, slightly, and slowly, when the steered angle target value $\theta t\_ref$ is switched at the time of switching the turning direction as in the examples of FIGS. 38A and 38B, the steering speed target value $\omega t\_ref$ becomes substantially zero. Here, unlike the examples of FIGS. 38A and 38B, since the steered angle target value $\theta t\_ref$ also takes a value close to zero, the first current compensation value Iref_b0 output from the current compensation value calculation unit 771 also outputs a small value, but by multiplying the first current compensation value Iref_b0 by the gain Gi calculated by the current sensitive gain generation unit 773, it is possible to prevent the second current compensation value Iref_b from becoming too small.

Thus, even in a situation where the steering wheel operation by the driver is slight, it is possible to reduce the sense of discomfort given to the driver in switching of the steering direction from turning increase to turning back of the steering wheel operation by the driver or switching from the turning back to the turning increase.

As described above, the steered angle control unit 700 includes the friction compensation unit 770, and is configured to calculate the second current compensation value Iref_b for compensating for the following delay of the actual steered angle $\theta t\_act$ with respect to the steered angle target value $\theta t\_ref$ caused by friction in the turning mechanism on the basis of the steered angle target value $\theta t\_ref$, whereby the friction compensation control can be effectively and appropriately performed regardless of the steering wheel operation speed of the driver.

Furthermore, as described above, by setting the second current compensation value Iref_b to have a characteristic of increasing or decreasing according to the second steering motor current command value It_ref, friction compensation control according to the frictional force caused by the gear torque can be implemented.

In the present disclosure, the road surface reaction force sensitive torque compensation value generation unit 220 calculates the road surface reaction force torque estimation value Tsat_est according to the first steering motor current command value Iref_a before adding the second current compensation value Iref_b output from the friction compensation unit 770, whereby the road surface reaction force torque estimation value Tsat_est according to the behavior of the actual road surface reaction force torque Tsat_act during actual traveling of the vehicle can be obtained, and the steering reaction force according to the road surface reaction force torque estimation value Tsat_est can be given.

Further, in the present disclosure, the increase or decrease of the first gain Ga and the second gain Gb in a section from the first vehicle speed Vs_A to the second vehicle speed Vs_B may be linearly changed with respect to the vehicle speed as illustrated in FIG. 19 and the like, or a part of the section may be changed non-linearly.

Note that the drawings used in the above-described embodiments are conceptual diagrams for describing the present disclosure in a qualitative manner, and are not limited thereto. In addition, the above-described embodiments are preferred embodiments of the present disclosure, but are not limited thereto, and various modifications can be made without departing from the gist of the present disclosure.

Reference Signs List

1 STEERING WHEEL
2 COLUMN SHAFT
3a, 3b TIE ROD
5L, 5R STEERED WHEEL
6a, 6b ARM
10 VEHICLE SPEED SENSOR

11 IGNITION KEY
12 BATTERY
30 REACTION FORCE DEVICE
31 REACTION FORCE MOTOR
32 DECELERATION MECHANISM
33 STEERING ANGLE SENSOR
34 TORQUE SENSOR
35 STOPPER (ROTATION LIMITING MECHANISM)
40 STEERING DEVICE
41 STEERING MOTOR
42 DECELERATION MECHANISM
43 ANGLE SENSOR
44 PINION RACK MECHANISM
50 CONTROL DEVICE
60 REACTION FORCE CONTROL SYSTEM
70 STEERING CONTROL SYSTEM
200, 200a, 200b, 200c, 200d, 200e STEERING TORQUE TARGET VALUE GENERATION UNIT
210 STEERING REACTION FORCE TORQUE VALUE GENERATION UNIT
211 STEERING REACTION FORCE TORQUE MAP UNIT
220 ROAD SURFACE REACTION FORCE SENSITIVE TORQUE COMPENSATION VALUE GENERATION UNIT
221 ROAD SURFACE REACTION FORCE TORQUE ESTIMATION UNIT
222 ROAD SURFACE REACTION FORCE SENSITIVE TORQUE MAP UNIT
230, 230a, 230b.230c, 230d, 230e GAIN RATIO GENERATION UNIT (FIRST GAIN RATIO GENERATION UNIT AND SECOND GAIN RATIO GENERATION UNIT)
231 GAIN RATIO CALCULATION UNIT
240 DAMPING TORQUE VALUE GENERATION UNIT
241 DAMPING GAIN MAP UNIT
250 HYSTERESIS COMPENSATION UNIT
251 HYSTERESIS COMPENSATION VALUE CALCULATION UNIT
400 STEERING TORQUE CONTROL UNIT
500 CURRENT CONTROL UNIT
600 STEERED ANGLE TARGET VALUE GENERATION UNIT
700 STEERED ANGLE CONTROL UNIT
710 FEEDFORWARD COMPENSATION UNIT
720 ADDITION UNIT
730 PID CONTROL UNIT
740 STABILIZATION COMPENSATION UNIT
750 ADDITION UNIT
760 OUTPUT LIMITATION UNIT
770, 770a FRICTION COMPENSATION UNIT
771, 771a CURRENT COMPENSATION VALUE CALCULATION UNIT
772 DIFFERENTIATION UNIT
773 CURRENT SENSITIVE GAIN GENERATION UNIT
774 PREVIOUS VALUE HOLDING UNIT
775 ABSOLUTE VALUE CALCULATION UNIT
776 MULTIPLICATION UNIT
800 CURRENT CONTROL UNIT

**Claims**

1. A control device of a vehicle steering system including a reaction force device that drives a reaction force motor that gives a steering reaction force to a steering wheel according to a steering angle of the steering wheel, and a steering device that drives a steering motor that steers a steered wheel according to the steering angle of the steering wheel, the control device comprising:

   a steering torque target value generation unit that generates a steering torque target value that is a target value of steering torque for obtaining the steering reaction force;

a steered angle target value generation unit that generates, on a basis of the steering angle, a steered angle target value that is a target value of the steered angle of the steered wheel; and

a steered angle control unit that generates, on a basis of the steered angle target value, a first steering motor current command value that is a target value of a current to be supplied to the steering motor, wherein

the steering torque target value generation unit includes

a steering reaction force torque value generation unit that generates a first torque value that increases or decreases according to at least the steering angle,

a road surface reaction force sensitive torque compensation value generation unit that generates a second torque value that increases or decreases according to at least a road surface reaction force torque estimation value estimated on a basis of the first steering motor current command value, and

a gain ratio generation unit that generates a first gain that increases or decreases according to at least one of a vehicle speed or a steered angle of a vehicle, and a second gain that causes a sum of the first gain and the second gain to be one, and

the steering torque target value generation unit adds a value obtained by multiplying the first torque value by the first gain and a value obtained by multiplying the second torque value by the second gain to generate the steering torque target value.

2. The control device of the vehicle steering system according to claim 1, wherein
the steering torque target value generation unit increases the second torque value as the vehicle speed increases.

3. The control device of the vehicle steering system according to claim 1, wherein
the gain ratio generation unit decreases the first gain as the vehicle speed increases.

4. The control device of the vehicle steering system according to claim 3, wherein
the gain ratio generation unit decreases the first gain within a range from a first vehicle speed or more to a second vehicle speed or less.

5. The control device of the vehicle steering system according to claim 4, wherein
a first gain in a range equal to or less than the first vehicle speed is larger than a second gain in a range equal to or more than the second vehicle speed.

6. The control device of the vehicle steering system according to claim 4, wherein
a first gain in a range equal to or less than the first vehicle speed is equal to a second gain in a range equal to or more than the second vehicle speed.

7. The control device of the vehicle steering system according to claim 4, wherein
a first gain in a range equal to or less than the first vehicle speed is smaller than a second gain in a range equal to or more than the second vehicle speed.

8. The control device of the vehicle steering system according to claim 1, wherein
the gain ratio generation unit decreases the first gain as an actual steering angle that is an actual steering angle of the steering wheel increases.

9. The control device of the vehicle steering system according to claim 8, wherein
the gain ratio generation unit decreases the first gain within a range from a first steering angle or more to a second steering angle or less.

10. The control device of the vehicle steering system according to claim 9, wherein
a first gain in a range equal to or less than the first steering angle is larger than a second gain in a range equal to or more than the second steering angle.

11. The control device of the vehicle steering system according to claim 9, wherein
a first gain in a range equal to or less than the first steering angle is equal to a second gain in a range equal to or more than the second steering angle.

12. The control device of the vehicle steering system according to claim 9, wherein
a first gain in a range equal to or less than the first steering angle is smaller than a second gain in a range equal to or more than the second steering angle.

13. The control device of the vehicle steering system according to claim 1, wherein
the gain ratio generation unit decreases the first gain as actual steered angle that is an actual steered angle of the steered wheel increases.

14. The control device of the vehicle steering system according to claim 13, wherein
the gain ratio generation unit decreases the first gain within a range from a first steered angle or more to a second steered angle or less.

15. The control device of the vehicle steering system according to claim 14, wherein
a first gain in a range equal to or less than the first steered angle is larger than a second gain in a range equal to or more than the second steered angle.

16. The control device of the vehicle steering system according to claim 14, wherein
a first gain in a range equal to or less than the first steered angle is equal to a second gain in a range equal to or more than the second steered angle.

17. The control device of the vehicle steering system according to claim 14, wherein
a first gain in a range equal to or less than the first steered angle is smaller than a second gain in a range equal to or more than the second steered angle.

18. The control device of the vehicle steering system according to any one of claims 1 to 17, wherein

the steered angle control unit includes
a friction compensation unit that calculates, on a basis of the steered angle target value, a steering motor current compensation value different between a case where the steered wheel is turned rightward and a case where the steered wheel is turned leftward, and
the steered angle control unit
generates a second steering motor current command value for driving the steering motor on a basis of the first steering motor current command value and the steering motor current compensation value.

19. The control device of the vehicle steering system according to claim 18, wherein
the steering motor current compensation value has a hysteresis characteristic according to a change in the steered angle target value.

20. The control device of the vehicle steering system according to claim 18, wherein
the steering motor current compensation value monotonously increases in a region from a first steered angle target value when steering is started to a second steered angle target value or less obtained by adding a predetermined steered angle change amount threshold to the first steered angle target value, and becomes a constant value in a region larger than the second steered angle target value.

21. The control device of the vehicle steering system according to claim 18, wherein
the friction compensation unit increases or decreases the steering motor current compensation value in accordance with the second steering motor current command value.

22. The control device of the vehicle steering system according to claim 21, wherein
the steering motor current compensation value monotonously increases as the second steering motor current command value increases.

23. The control device of the vehicle steering system according to claim 22, further comprising:

a current compensation value calculation unit that calculates a first current compensation value; and
a current sensitive gain generation unit that generates a gain that monotonically increases as the second steering motor current command value increases, wherein
the friction compensation unit calculates a second current compensation value by multiplying the first current compensation value by the gain.

24. The control device of the vehicle steering system according to claim 22, wherein
the friction compensation unit holds data in which the second steering motor current command value is associated with a gain that monotonically increases as the second steering motor current command value increases, and calculates the steering motor current compensation value on a basis of the data.

# FIG.1

# FIG.2

50

110

| 104 | | 101 |
|---|---|---|
| EEPROM | | CPU |

102

ROM

103

RAM

105

# FIG.3

# FIG.4

**200**
STEERING TORQUE TARGET VALUE GENERATION UNIT

θ h_act
Vs

**210**
STEERING REACTION FORCE TORQUE VALUE GENERATION UNIT

Tref_a    **261**    Ga×Tref_a    **271**    **273**    Th_ref

**230**
GAIN RATIO GENERATION UNIT

Ga
Gb

Iref_a
θ t_act

**220**
ROAD SURFACE REACTION FORCE SENSITIVE TORQUE COMPENSATION VALUE GENERATION UNIT

Tref_d    Gb×Tref_d

**262**

**240**
DAMPING TORQUE VALUE GENERATION UNIT

Tref_b    **272**

**250**
HYSTERESIS COMPENSATION UNIT

Tref_c

# FIG.5

210

STEERING REACTION FORCE TORQUE
VALUE GENERATION UNIT

213

SIGN
EXTRACTION
UNIT

Sgn($\theta$h)

212

$\theta$h_act

ABSOLUTE
VALUE
CALCULATION
UNIT

|$\theta$h|

211

STEERING
REACTION
FORCE
TORQUE
MAP UNIT

Tref_a0

Tref_a

214

Vs

# FIG.6A

Tref_a0

HIGH VEHICLE
SPEED

MIDDLE VEHICLE
SPEED

LOW VEHICLE
SPEED

0 [kph]

$|\theta h|$

# FIG.6B

Tref_a

HIGH
VEHICLE
SPEED

MIDDLE
VEHICLE
SPEED

LOW
VEHICLE
SPEED

0 [kph]

$\theta h\_act$

# FIG.7

240

DAMPING TORQUE VALUE
GENERATION UNIT

$\theta$ h_act

242

DIFFERENTIATION
UNIT

$\omega$ h

243

Tref_b

Vs

241

DAMPING GAIN
MAP UNIT

DG

# FIG.8A

# FIG.8B

# FIG.9

# FIG.10

# FIG.11

# FIG.12

ROAD SURFACE REACTION FORCE SENSITIVE TORQUE COMPENSATION VALUE GENERATION UNIT — 220

Iref_a → ROAD SURFACE REACTION FORCE TORQUE ESTIMATION UNIT (221) → Tsat_est

Vs →

SIGN EXTRACTION UNIT (224) → Sgn(Tsat_est)

ABSOLUTE VALUE CALCULATION UNIT (223) → |Tsat_est|

ROAD SURFACE REACTION FORCE SENSITIVE TORQUE MAP UNIT (222) → Tref_d0 → (225) → Tref_d

EP 4 512 703 A1

# FIG.13

41

STEERING
MOTOR
Tm

$D_M \cdot \omega_M$

$J \cdot \alpha_M$

$Fr \cdot sign(\omega_M)$

$T_{SAT}$

# FIG.14

ROAD SURFACE REACTION
FORCE TORQUE ESTIMATION UNIT — 221

Iref_a → CONVERSION UNIT (311) → Tm

θt_act → ANGULAR VELOCITY CALCULATION UNIT (312) → $\omega_M$ → $D_M$ (315)

ANGULAR ACCELERATION CALCULATION UNIT (313) → $\alpha_M$ → J (317)

→ (318) → Tsat_est

FIG.15

# FIG.16

```
Iref_a ──────────►  ┌─────────────┐
                    │             │
FL ──────────────►  │ PROCESSING  │
                    │   DEVICE    │
FR ──────────────►  │             │
                    └─────────────┘
```

# FIG.17

Tref_d0

HIGH VEHICLE
SPEED

MIDDLE VEHICLE
SPEED

LOW VEHICLE
SPEED

0 [kph]

|Tsat_est|

# FIG.18

# FIG.19A

# FIG.19B

# FIG.19C

# FIG.20

STEERING TORQUE TARGET VALUE GENERATION UNIT  $\sim$ 200a

θh_act

Vs

210 STEERING REACTION FORCE TORQUE VALUE GENERATION UNIT — Tref_a — 261 — Ga×Tref_a — 271 — 273 — Th_ref

230a GAIN RATIO GENERATION UNIT — Ga / Gb

Iref_a

θt_act

220 ROAD SURFACE REACTION FORCE SENSITIVE TORQUE COMPENSATION VALUE GENERATION UNIT — Tref_d — Gb×Tref_d — 262

240 DAMPING TORQUE VALUE GENERATION UNIT — Tref_b — 272

250 HYSTERESIS COMPENSATION UNIT — Tref_c

# FIG.21

# FIG.22

STEERING TORQUE TARGET VALUE GENERATION UNIT 200b

$\theta$ h_act

Vs

210 STEERING REACTION FORCE TORQUE VALUE GENERATION UNIT

Tref_a

261

Ga×Tref_a

271

273

Th_ref

$\theta$ t_act

230b GAIN RATIO GENERATION UNIT

Ga

Gb

Iref_a

$\theta$ t_act

220 ROAD SURFACE REACTION FORCE SENSITIVE TORQUE COMPENSATION VALUE GENERATION UNIT

Tref_d

Gb×Tref_d

262

240 DAMPING TORQUE VALUE GENERATION UNIT

Tref_b

272

250 HYSTERESIS COMPENSATION UNIT

Tref_c

# FIG.23

# FIG.24

STEERING TORQUE TARGET VALUE GENERATION UNIT — 200c

$\theta$ h_act

Vs

210 — STEERING REACTION FORCE TORQUE VALUE GENERATION UNIT

Tref_a — 261 — Ga×Tref_a — 271 — 273 — Th_ref

230c — GAIN RATIO GENERATION UNIT — Ga — Gb

Iref_a

$\theta$ t_act

220 — ROAD SURFACE REACTION FORCE SENSITIVE TORQUE COMPENSATION VALUE GENERATION UNIT

Tref_d — Gb×Tref_d — 262

240 — DAMPING TORQUE VALUE GENERATION UNIT

Tref_b — 272

250 — HYSTERESIS COMPENSATION UNIT

Tref_c

# FIG.25

# FIG.26A

# FIG.26B

# FIG.27

# FIG.28

EP 4 512 703 A1

**GAIN RATIO GENERATION UNIT** — 230d

Vs → **FIRST GAIN RATIO GENERATION UNIT** (230) → Ga1, Gb1 → **GAIN RATIO CALCULATION UNIT** (231)

$\theta$ t_act → **SECOND GAIN RATIO GENERATION UNIT** (230b) → Ga2, Gb2 → **GAIN RATIO CALCULATION UNIT** (231)

Ga=(Ga1×Ga2)/{(Ga1×Ga2)+(Gb1×Gb2)}

Gb=(Gb1×Gb2)/{(Ga1×Ga2)+(Gb1×Gb2)}

# FIG.29A

# FIG.29B

# FIG.30

# FIG.31

# FIG.32

# FIG.33

EP 4 512 703 A1

# FIG.34

Iref_b0

$A(x_1, y_1)$

L1

L3

$\theta$ t_ref

0

L2

$B(x_2, y_2)$

# FIG.35A

Gi

|It_ref'|

0

# FIG.35B

Gi

k

|It_ref'|

0

# FIG.36

# FIG.37

FRICTION COMPENSATION UNIT — 770a

It_ref → PREVIOUS VALUE HOLDING UNIT (774) → It_ref' → ABSOLUTE VALUE CALCULATION UNIT (775) → |It_ref'|

θt_ref → DIFFERENTIATION UNIT (772) → ωt_ref → CURRENT COMPENSATION VALUE CALCULATION UNIT (771a) → Iref_b

EP 4 512 703 A1

# FIG.38A

# FIG.38B

# FIG.39A

# FIG.39B

## INTERNATIONAL SEARCH REPORT

| International application No. |
| --- |
| **PCT/JP2022/047144** |

### A. CLASSIFICATION OF SUBJECT MATTER

*B62D 101/00*(2006.01)n; *B62D 119/00*(2006.01)n; ***B62D 6/00***(2006.01)i; ***B62D 5/04***(2006.01)i
FI:  B62D6/00; B62D5/04; B62D101:00; B62D119:00

According to International Patent Classification (IPC) or to both national classification and IPC

### B. FIELDS SEARCHED

Minimum documentation searched (classification system followed by classification symbols)
  B62D101/00; B62D119/00; B62D6/00; B62D5/04

Documentation searched other than minimum documentation to the extent that such documents are included in the fields searched

  Published examined utility model applications of Japan 1922-1996
  Published unexamined utility model applications of Japan 1971-2023
  Registered utility model specifications of Japan 1996-2023
  Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2013/061568 A1 (NISSAN MOTOR CO., LTD.) 02 May 2013 (2013-05-02) paragraphs [0042]-[0060], [0063]-[0068], fig. 12-18, 21-23 | 1, 3-12 |
| Y | | 18-19 |
| A | | 2, 13-17, 20-24 |
| Y | WO 2021/157727 A1 (NSK LTD.) 12 August 2021 (2021-08-12) fig. 7 | 18-19 |
| A | WO 2011/101979 A1 (MITSUBISHI ELECTRIC CORP.) 25 August 2011 (2011-08-25) entire text, all drawings | 1-20 |
| A | WO 2016/162902 A1 (NISSAN MOTOR CO., LTD.) 13 October 2016 (2016-10-13) entire text, all drawings | 1-20 |

☐ Further documents are listed in the continuation of Box C.     ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **24 February 2023** | **07 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/047144**

| Patent document cited in search report | | | Publication date (day/month/year) | Patent family member(s) | | | Publication date (day/month/year) |
|---|---|---|---|---|---|---|---|
| WO | 2013/061568 | A1 | 02 May 2013 | (Family: none) | | | |
| WO | 2021/157727 | A1 | 12 August 2021 | US<br>fig. 7 | 2022/0355856 | A1 | |
| WO | 2011/101979 | A1 | 25 August 2011 | US<br>entire text, all drawings<br>EP<br>CN | 2012/0296525<br><br>2537732<br>102770328 | A1<br><br>A1<br>A | |
| WO | 2016/162902 | A1 | 13 October 2016 | US<br>entire text, all drawings<br>EP<br>CN | 2018/0086341<br><br>3281845<br>107531276 | A1<br><br>A1<br>A | |

Form PCT/ISA/210 (patent family annex) (January 2015)

70

**REFERENCES CITED IN THE DESCRIPTION**

**Patent documents cited in the description**

- WO 2019167661 A1